# EUROPÄISCHE PATENTSCHRIFT

(11) **EP 3 284 152 B1**
(45) Veröffentlichungstag und Bekanntmachung des Hinweises auf die Patenterteilung: **17.04.2019**
(21) Anmeldenummer: 16705160.6
(22) Anmeldetag: 18.02.2016
(51) Int. Cl.: H02J 3/12, H02J 13/00, H02J 3/32, H02J 3/38

(54) **ENERGIEÜBERTRAGUNGSSTEUERUNG ZWISCHEN ENERGIEVERSORGUNGSNETZ UND ENDNUTZEREINRICHTUNGEN BASIEREND AUF ENERGIEFLUSS UND NETZQUALITÄT**
ENERGY TRANSMISSION CONTROL BETWEEN AN ENERGY SUPPLY NETWORK AND END-USER FACILITIES ON THE BASIS OF ENERGY FLOW AND NETWORK QUALITY
COMMANDE DE TRANSFERT D'ÉNERGIE ENTRE UN RÉSEAU D'ALIMENTATION EN ÉNERGIE ET DES DISPOSITIFS D'UTILISATEUR FINAL SUR LA BASE DU FLUX D'ÉNERGIE ET DE LA QUALITÉ DU RÉSEAU

(30) Priorität: 20.02.2015 DE 102015102449
(43) Veröffentlichungstag der Anmeldung: 21.02.2018
(73) Patentinhaber: InnoSense AG, 8004 Zürich (CH)
(72) Erfinder: HUNZIKER, Urs, 8706 Meilen (CH)
(74) Vertreter: Dilg, Haeusler, Schindelmann Patentanwaltsgesellschaft mbH
(86) Internationale Anmeldenummer: PCT/EP2016/053412
(87) Internationale Veröffentlichungsnummer: WO 2016/131898

(56) Entgegenhaltungen:
- WO-A1-2013/086238
- DE-A1-102012 218 889
- GB-A- 2 426 878
- US-A1- 2011 077 753
- US-A1- 2011 208 367
- US-A1- 2014 070 756

## Beschreibung

Die Erfindung betrifft eine Vorrichtung und ein Verfahren zum Steuern der Übertragung von elektrischer Energie zwischen einem Energieversorgungsnetz und zumindest einem Teil von einer Mehrzahl von Endnutzereinrichtungen, eine Anordnung, ein computerlesbares Speichermedium und ein Software-Programm.

Es sind viele Einzellösungen zu DSM (Demand Side Management, Laststeuerung) vorgeschlagen worden. DSM bezeichnet die Steuerung der Nachfrage nach netzgebundenen Energieleistungen bei Abnehmern in Industrie und Privathaushalten. Herkömmliche DSM-Systeme haben sich aufgrund ihrer 15 Beschränkungen bislang aber nicht durchgehend durchsetzen können.

D1 (DE 10 2012 218889 A1) offenbart ein Verfahren zum Übertragen von elektrischer Leistung zwischen einem Energieversorgungsnetz und einem mit diesem gekoppelten Energieverbraucher/Erzeuger.

D2 (US 2014/070756 A1) offenbart ein Verfahren zum Ausbalancieren von Frequenzinstabilitäten auf einem elektrischen Energieversorgungsnetz unter Verwendung von vernetzten und verteilt angeordneten Energiespeichersystemen.

D3 (US 2011/077753 A1) offenbart ein Verfahren zum Stabilisieren eines elektrischen Energieversorgungsnetzen.

D4 (GB 2 426 878 A1) offenbart eine Steuervorrichtung für eine elektrische Last, welche von einem elektrischen Versorgungsnetz mit Energie versorgt wird.

D5 (US 2011/208367 A1) offenbart ein Verfahren zum Steuern von elektrischen Schaltungen in einem elektrischen Energieversorgungsnetz.

D6 (WO 2013/086238 A1) betrifft die Regulierung von Blindleistung in einem Energieversorgungsnetz mittels einer kontrollierten Zuschaltung von statischen Blindleistungskompensatoren.

Es ist eine Aufgabe der vorliegenden Erfindung, ein effektives Übertragen von Energie zwischen einem Energieversorgungsnetz und Endnutzereinrichtungen zu ermöglichen.

20 Diese Aufgabe wird durch die Gegenstände mit den Merkmalen gemäß den unabhängigen Patentansprüchen gelöst. Weitere Ausführungsbeispiele sind in den abhängigen Ansprüchen gezeigt.

In einem computerlesbaren Speichermedium gemäß einem Ausführungsbeispiel der vorliegenden Erfindung ist ein Programm zum Steuern der Übertragung von elektrischer Energie zwischen einem Energieversorgungsnetz und zumindest einem Teil von einer Mehrzahl von Endnutzereinrichtungen gespeichert, welches Programm, wenn es von einem oder mehreren Prozessoren ausgeführt wird, die oben beschriebenen Verfahrensschritte aufweist bzw. durchführt.

Ein Software-Programm (zum Beispiel gebildet durch ein oder mehrere Computerprogramm-Elemente, welche optional auch örtlich verteilt und/oder mit kommunikativem Datenaustausch untereinander verbunden sein können) gemäß einem Ausführungsbeispiel der vorliegenden Erfindung zum Steuern der Übertragung von elektrischer Energie zwischen einem Energieversorgungsnetz und zumindest einem Teil von einer Mehrzahl von Endnutzereinrichtungen weist die oben beschriebenen Verfahrensschritte auf (bzw. führt diese durch oder steuert diese), wenn es von einem oder mehreren Prozessoren der Vorrichtung ausgeführt wird.

Ausführungsbeispiele der vorliegenden Erfindung können sowohl mittels eines Computerprogramms, das heißt einer Software, als auch mittels einer oder mehrerer spezieller elektrischer Schaltungen, das heißt in Hardware, oder in beliebig hybrider Form, das heißt mittels Software-Komponenten und Hardware-Komponenten, realisiert werden.

Im Rahmen der vorliegenden Anmeldung werden unter dem Begriff "Endnutzereinrichtungen" insbesondere an das Energieverteilungsnetz angeschlossene oder anschließbare Nutzereinheiten verstanden, die mindestens eine Energieverbraucheinheit (insbesondere eine elektrische Last, zum Beispiel eine elektrische Heizung) und/oder mindestens eine Energieerzeugungseinheit (die eine Energieverbraucheinheit einer Endnutzereinrichtung mit elektrischem Strom versorgen kann und/oder diesen Strom in das Energieversorgungsnetz einspeisen kann, zum Beispiel eine Solaranlage) und/oder mindestens eine Energiezwischenspeichereinheit (die elektrische Energie aus dem Energieversorgungsnetz und/oder von einer Energieerzeugeinheit zwischenspeichern kann, zum Beispiel eine beladbare und entladbare Batterie) aufweisen kann. Unterschiedliche Endnutzereinrichtungen können dezentral zueinander und zu dem Energieverteilungsnetz angeordnet sein. Beispiele für Endnutzereinrichtungen sind Gebäudeteile (zum Beispiel eine Wohnung), ein Gebäude, ein privater Nutzer, ein Industrieunternehmen, etc.

Im Rahmen der vorliegenden Anmeldung kann unter dem Begriff "Netzqualitätscharakteristik" eine auf eine Qualität des Energieversorgungsnetzes bezogene Charakteristik verstanden werden, die in dem Energieversorgungsnetz in der Vergangenheit herrschte, gegenwärtig herrscht und/oder in der Zukunft herrschen wird. Die Netzqualitätscharakteristik kann also die Güte eines Signals bezeichnen, das auf dem Energieversorgungsnetz hin zu einer von dem Energieversorgungsnetz mit elektrischer Energie versorgten elektrischen Endnutzereinrichtung (oder beim Einspeisen von Energie in das Energieversorgungsnetz mittels der Endnutzereinrichtung in umgekehrter Richtung) propagiert. Eine hohe Netzqualitätscharakteristik kann durch einen konstanten oder stetigen Verlauf dieses Signals (zum Beispiel ein Spannungssignal oder ein Stromsignal) gekennzeichnet sein. Durch das sensorische Erfassen oder Detektieren eines solchen Signals kann der für die Netzqualitätscharakteristik indikative Messparameter ermittelt werden.

Gemäß einem exemplarischen Ausführungsbeispiel kann mittels einer Sensoreinrichtung überwacht werden, welche Energiemenge gegenwärtig über das Energieversorgungsnetz übertragen wird und wie der gegenwärtige Zustand der Netzqualitätscharakteristik ist. Basierend auf diesen beiden Parametern kann dann entschieden werden, in welcher Form und/oder Richtung und/oder wie viel Energie über das Energieversorgungsnetz zukünftig übertragen werden soll. Bei Implementationen, welche nur Energie beziehen oder einspeisen können, bezieht sich die Entscheidungsfähigkeit auf die jeweils lokal vorhandenen Möglichkeiten. Durch die Miteinbeziehung der Netzqualität als Regelungsparameter zum Verwalten von über das Energieversorgungsnetz übertragener Energie kann die Energieversorgungssicherheit erhöht werden, da auf eine Änderung der Netzqualität mit einer Änderung der aus dem Energieversorgungsnetz entnommenen oder in das Energieversorgungsnetz eingespeisten Energie reagiert werden kann. Unerwünschte Schwankungen in der Energieversorgung können dadurch vermieden werden, und zeitweise Unterbrechungen der Energieversorgung können auf diese Weise sehr unwahrscheinlich gemacht werden.

Im Weiteren werden zusätzliche exemplarische Ausführungsbeispiele der Vorrichtung, der Anordnung, des Verfahrens, des computerlesbaren Speichermediums und des Software-Programms beschrieben.

Gemäß einem exemplarischen Ausführungsbeispiel kann die Steuereinrichtung zum Steuern der Übertragung von elektrischer Energie von dem Energieversorgungsnetz zu Energieverbraucheinheiten der Endnutzereinrichtungen eingerichtet sein. Gemäß dieser Ausgestaltung kann die Steuerung des Energieflusses von dem Energieversorgungsnetz zu den Endnutzereinrichtungen netzqualitätsabhängig ausgestaltet werden. Somit kann bei einer übermäßig starken Belastung des Energieversorgungsnetzes durch eine hohe Entnahme von Energie seitens der Energieverbraucheinheiten die von den Endnutzereinrichtungen entnommene Energie zumindest zeitweise reduziert werden, um das Energieversorgungsnetz zu entlasten und dadurch dessen Netzqualitätscharakteristik in einen Sollzustand zurückzuführen.

Gemäß einem exemplarischen Ausführungsbeispiel kann die Steuereinrichtung alternativ oder ergänzend zum Steuern der Übertragung von elektrischer Energie von Energieerzeugungseinheiten der Endnutzereinrichtungen zu dem Energieversorgungsnetz eingerichtet sein. Gemäß dieser Ausgestaltung können Energieerzeugungseinrichtungen der Endnutzereinrichtungen zum Stabilisieren der Netzqualitätscharakteristik herangezogen werden, indem in Zeiten überbelasteter und somit netzqualitätsarmer Zustände des Energieversorgungsnetzes die rückgespeiste Energiemenge erhöht wird.

Gemäß einem exemplarischen Ausführungsbeispiel kann die Steuereinrichtung eine Mehrzahl von Steuereinheiten aufweisen, von denen jede einer zugehörigen der Endnutzereinrichtungen zugeordnet sein kann, und wobei eine jeweilige der Steuereinheiten eingerichtet sein kann, das Steuern autonom von und kooperierend mit anderen Steuereinheiten durchzuführen. Im Rahmen der vorliegenden Anmeldung wird unter dem Begriff "autonomes Steuern" insbesondere verstanden, dass jede der Steuereinheiten vollkommen eigenständig und unabhängig von anderen Steuereinheiten darüber entscheidet, welcher Anteil der Energie, die mindestens eine zugeordnete Energieerzeugungseinrichtung gegenwärtig erzeugt, in das Energieversorgungsnetz eingespeist wird, und/oder welche Energie zur Versorgung einer Energieverbraucheinheit aus dem Energieversorgungsnetz entnommen werden soll. Die endnutzereinrichtungsseitige Steuerung kann dann dezentral und ohne eine übergeordnete Steuerung durchgeführt werden und ist auch nicht von bindenden Steuerkommandos abhängig, die von dem Energieversorgungsnetz bereitgestellt werden. Im Rahmen der vorliegenden Anmeldung wird unter dem Begriff "kooperatives Steuern" insbesondere verstanden, dass eine jeweilige Steuereinheit bei ihrer Steuerlogik das Verhalten anderer Steuereinheiten berücksichtigt und/oder im Vorfeld und/oder im Nachgang zu dem eigenen Steuern mit anderen Steuereinheiten zum Abstimmen oder Koordinieren oder Synchronisieren des Steuerverhaltens kommuniziert oder das Verhalten von anderen Steuereinheiten anhand der Netzqualitätsveränderung erkennt. Mit anderen Worten kann in einen Steuerungsalgorithmus, den die Steuereinheit als Basis für die Steuerung des Grads der Energieeinspeisung in das und/oder der Energieentnahme aus dem Energieversorgungsnetz durchführt, auch das Betriebsverhalten der anderen Endnutzereinrichtungen eingehen. Zum Beispiel kann der Grad der Energieeinspeisung und/oder Energieentnahme durch eine Endnutzereinrichtung vom Grad der Energieeinspeisung und/oder Energieentnahme durch die übrigen Endnutzereinrichtungen abhängig gemacht werden (zum Beispiel kann dadurch ein antizyklisches Einspeise- und/oder Entnahmeverhalten zwischen den Endnutzereinrichtungen abgestimmt werden, um Einspeise- und/oder Entnahmespitzen und somit ein Energieüberangebot sowie eine Energieknappheit in dem Energieversorgungsnetz durch ein gleichförmiges, unabgestimmtes Verhalten zu verhindern). Die Steuerlogik einer bestimmten Steuereinheit kann zum Erreichen des Ziels angepasst werden, dass Steuervorschläge anderer Steuereinheiten, sofern diese nicht im Widerspruch zu höherpriorisierten eigenen Steuerprinzipien der Vorrichtung stehen, in der eigenen Steuerlogik berücksichtigt werden. Eine Mitteilung eines eigenen Steuerverhaltens von einer Steuereinheit an andere Steuereinheiten über ein Kommunikationsnetzwerk kann die anderen Steuereinheiten mit der Datenbasis versorgen, die nötig ist, um das Steuerverhalten der kommunizierenden Steuereinheit auch für das Steuern der anderen Steuereinheiten zu berücksichtigen. Es hat sich herausgestellt, dass die Bereitschaft von Endnutzereinrichtungen und deren Betreibern, insbesondere Privaten, an der Teilnahme in einem Energieversorgungssystem mit gesteuerter Energieverteilungsmenge umso ausgeprägter ist, je höher die Kompetenz der dezentralen oder lokalen Steuereinheiten ist, die lokale Steuerung autonom durchführen zu können. Indem die Steuerung unabhängig von einer zentralen Steuereinrichtung des Energieversorgungsnetzes auf Ebene der einzelnen Endnutzereinrichtungen durchgeführt werden kann, sind die Endnutzereinrichtungen unabhängig von möglicherweise unerwünschten Steuerkommandos einer zentralen Entität, welche die Bedürfnisse auf lokaler Ebene unberücksichtigt lassen. Eine rein autonome Steuerung mehrerer Steuereinheiten könnte jedoch die Gefahr bergen, dass durch den Einsatz einander entsprechender Steuerlogiken durch unterschiedliche, völlig unabhängig voneinander agierende Steuereinheiten ein gleichförmiges Verhalten der Steuereinheiten und somit Endnutzereinrichtungen zu befürchten wäre, was zu unerwünschten Aufschaukelungseffekten führen könnte. Diese könnten das Energieversorgungsnetz stark belasten. Indem die autonome Steuerung der Endnutzereinrichtungen durch ein kooperatives Verhalten der Steuereinheiten ergänzt wird (insbesondere durch ein kooperatives Verhalten, das keine Kommunikation zwischen den einzelnen Steuereinheiten benötigt, aber beim Vorhandensein einer solchen besser abgestimmte Ergebnisse bringt), können solche unerwünschten Effekte vermieden werden.

Gemäß einem exemplarischen Ausführungsbeispiel kann die Steuereinrichtung bzw. können die einzelnen Steuereinheiten eingerichtet sein, dass das kooperierende Steuern kommunikationslos (d.h. ohne Kommunikation mit anderen Steuereinrichtungen bzw. Steuereinheiten) auf Basis (insbesondere nur auf Basis) einer erfassten Netzqualitätscharakteristik des Energieversorgungsnetzes durchgeführt wird. Gemäß diesem bevorzugten Ausführungsbeispiel kann die kooperierende (und dadurch unerwünschte Aufschaukelungseffekte durch ein gleichförmiges Verhalten unterschiedlicher Steuereinrichtungen bzw. Steuereinheiten vermeidende) Steuerung des Energiemanagements durch eine Steuereinrichtung/Steuereinheit ohne Daten durchgeführt werden, die durch eine Kommunikation der Steuereinrichtung/Steuereinheit mit anderen Steuereinrichtungen/Steuereinheiten oder einer Kommunikationsschnittstelle des Energieversorgungsnetzes erhalten werden könnten. Stattdessen reicht es gemäß dem beschriebenen Ausführungsbeispiel aus, dass die Steuereinrichtung/Steuereinheit die Netzqualitätscharakteristik (insbesondere die aktuelle Versorgungsspannung des Energieversorgungsnetzes) abtastet bzw. erfasst und das Ergebnis dieses Erfassens verwendet, um die Energiesteuerung festzulegen. Dem liegt die Erkenntnis zugrunde, dass die gegenwärtige Netzqualität allein ein präziser Fingerabdruck des gegenwärtigen Verhaltens der anderen Steuereinrichtungen/Steuereinheiten ist und daher indirekt Informationen über das Verhalten der anderen Steuereinrichtungen/Steuereinheiten liefert. Auf diese Weise ist mit sehr geringem Aufwand ein autonomes und kooperatives Steuern ermöglicht.

Gemäß einem anderen exemplarischen Ausführungsbeispiel kann die Steuereinrichtung als den Endnutzereinrichtungen übergeordnete, mithin zentrale, Steuereinrichtung ausgebildet sein, welche die Endnutzereinrichtungen zentral steuert. Durch eine zentrale Steuereinrichtung kann besonders wirkungsvoll und mit geringem Steueraufwand vermieden werden, dass unterschiedliche Steuereinheiten durch ein nicht abgestimmtes, aber gleichförmiges Verhalten ein Aufschaukeln von aus dem Energieversorgungsnetz abgezogener Energie oder darin eingespeister Energie zustande kommen lassen. Zum Beispiel kann die zentrale Steuereinrichtung die diversen Endnutzereinrichtungen mit vorgebbaren Phasenverschiebungen oder Zeitversätzen zueinander steuern, so dass einem ein Aufschaukeln begünstigenden Verhalten der einzelnen Endnutzereinrichtungen wirksam entgegengewirkt werden kann.

Gemäß einem exemplarischen Ausführungsbeispiel kann die Steuereinrichtung eingerichtet sein, die Steuerung basierend auf einem mittels der Sensoreinrichtung detektierten Zeitverlauf der Netzqualitätscharakteristik zu steuern. Die sensorische Erfassung der Netzqualität als Basis für eine entsprechende Anpassung des Energiemanagements innerhalb des Energieversorgungsnetzes kann somit kontinuierlich oder zumindest über ein gewisses Zeitintervall hinweg erfolgen, so dass Änderungen der Netzqualität jederzeit erkannt werden können. Diesen kann dann durch eine entsprechende Steuerlogik entgegengewirkt werden, um eine konstante oder zumindest annähernd konstante Netzqualitätscharakteristik und somit ein stabiles Energieversorgungsnetz zu erreichen.

Gemäß einem exemplarischen Ausführungsbeispiel kann die Netzqualitätscharakteristik indikativ sein für die von dem Energieversorgungsnetz gegenwärtig und/oder in absehbarer Zukunft leistbare Energieversorgungskapazität, insbesondere eine Energieknappheit oder ein Energieüberangebot. Eine Energieversorgungsknappheit kann zum Beispiel dadurch zustande kommen, dass gleichzeitig viele Endnutzereinrichtungen Energie aus dem Energieversorgungsnetz anfordern. Sie kann auch dadurch zustande kommen, dass das Energieversorgungsnetz gegenwärtig nur in geringem Maße Energie generiert, zum Beispiel in Zeiten von Windstille bei einem Windkraftwerk oder in Zeiten bewölkten Wetters bei einer Solaranlage. Ein Überangebot kann zum Beispiel bei starkem Wind im Falle einer Windkraftanlage oder starken Sonnenscheins im Falle einer Solarkraftanlage zustande kommen. Eine erhöhte Versorgungsspannung bzw. eine erniedrigte Versorgungsspannung als Netzqualitätscharakteristik kann dann auf ein Energieüberangebot bzw. eine Energieknappheit hindeuten.

Gemäß einem exemplarischen Ausführungsbeispiel kann die Netzqualitätscharakteristik ein von dem Energieversorgungsnetz bereitgestellter elektrischer Spannungswert und/oder ein von dem Energieversorgungsnetz sich durch Verbrauch ergebender elektrischer Stromwert und/oder ein Crest Faktor der von dem Energieversorgungsnetz bereitgestellten Versorgung und/oder mindestens ein insbesondere diskontinuierliches Spannungsereignis in der von dem Energieversorgungsnetz gestellten elektrischen Spannung und/oder eine von dem Energieversorgungsnetz bereitgestellte Leistung und/oder eine von dem Energieversorgungsnetz bereitgestellte Energie und/oder Flicker-Ereignisse in dem von dem Energieversorgungsnetz bereitgestellten Signal und/oder mindestens eine Harmonische oder Zwischenharmonische der oder des von dem Energieversorgungsnetz bereitgestellten elektrischen Spannung oder elektrischen Stroms und/oder ein Rundsteuersignal (wobei die sogenannte Rundsteuertechnik (ripple control) zur Fernsteuerung von Stromverbrauchern durch Energieversorgungsunternehmen eingesetzt wird) und/oder eine Asymmetrie in der oder dem von dem Energieversorgungsnetz bereitgestellten elektrischen Spannung oder elektrischen Strom und/oder eine Frequenz der oder des von dem Energieversorgungsnetz bereitgestellten elektrischen Spannung oder elektrischen Strom sein. Diese oder andere Netzqualitätscharakteristika können durch die Steuereinrichtung durch eine Analyse des Energieversorgungsnetzes oder von Teilen davon ermittelt werden und in die Steuerung eingehen. Dadurch erfolgt die Steuerung aufgrund objektiver, physikalischer Parameter des Energieversorgungsnetzes und somit in präziser Weise.

Gemäß einem exemplarischen Ausführungsbeispiel kann die Netzqualitätscharakteristik anhand von Informationen hinsichtlich einer Impedanz von zumindest einem Teil des Energieversorgungsnetzes charakterisiert werden. Anders ausgedrückt kann ein entsprechender Impedanzwert die Netzqualitätscharakteristik darstellen. Gemäß einer ersten Ausgestaltung kann die Erfassung der Netzqualitätscharakteristik durch eine Messung einer Frequenzabhängigkeit der Impedanz erfolgen. Die Frequenzabhängigkeit der Impedanz erlaubt eine Bestimmung oder Abschätzung, wie und welche Kommunikation über Netzversorgungsleitungen möglich ist und/oder welche Störung (zum Beispiel Messung einer Dämpfung von harmonischen Oberwellen) im lokalen System vorhanden ist. Gemäß einer zweiten Ausgestaltung kann die Erfassung der Netzqualitätscharakteristik durch eine Messung der Impedanz zur Bestimmung eines Innenwiderstandes des Energieversorgungsnetzes erfolgen. Dadurch kann zum Beispiel sichergestellt werden, dass auf der Endverbraucherseite im Rahmen vorgesehener Energiebezugsmengen keine Unterspannung (zum Beispiel weniger als Nennspannung minus 10 %) bzw. bei Energieeinspeisung keine Überspannung (d.h. mehr als Nennspannung plus 6 %, insbesondere plus 10 %) auftritt. Gemäß einer dritten, besonders bevorzugten Ausgestaltung kann die Erfassung der Netzqualitätscharakteristik auch eine Messung eines Zeitverlaufs von Impedanz (insbesondere Quellenimpedanz) und Nennspannung beinhalten. Dies erlaubt eine konkrete Aussage über einen lokalen Netzauslastungszustand.

Jede der genannten Formen der Netzimpedanzmessung (und insbesondere die Kombination der verschiedenen Formen) kann zur dynamischen Abschätzung der aktuellen Quellenspannung, Parallellast und Innenimpedanz des Niederspannungsnetzes sowie der (Zukunfts-)Projektion dieser Werte verwendet werden.

Gemäß einem exemplarischen Ausführungsbeispiel kann die Steuereinrichtung eingerichtet sein, das Steuern basierend auf mindestens einer zeitlichen Ableitung, insbesondere der ersten Ableitung und/oder der zweiten Ableitung, der erfassten Netzqualitätscharakteristik durchzuführen. Es hat sich herausgestellt, dass bei Berücksichtigung des Steigungs- und/oder Krümmungsverhaltens der Netzqualitätscharakteristik die Steuerung wesentlich empfindlicher erfolgen kann. Zum Beispiel können Änderungen der Netzqualitätscharakteristik durch Analyse der ersten und/oder zweiten Ableitung der Netzqualitätscharakteristik wesentlich präziser detektiert werden als bei Analyse des Netzqualitätssignals selbst, da in der ersten bzw. zweiten Ableitung bestimmte spektrale Merkmale wesentlich besser sichtbar sind. Dadurch kann unter Berücksichtigung der ersten bzw. zweiten Ableitung die Genauigkeit der Steuerung verbessert werden.

Gemäß einem exemplarischen Ausführungsbeispiel kann die Steuereinrichtung eingerichtet sein, die Menge der übertragenen Energie unter Beteiligung des zumindest einen Teils der Mehrzahl von Endnutzereinrichtungen autonom und unabhängig von dem Energieversorgungsnetz und/oder von den anderen der Mehrzahl von Endnutzereinrichtungen zu steuern. Somit kann die Steuereinrichtung einigen der Endnutzereinrichtungen zugeordnet sein, wohingegen eine Gruppe anderer Endnutzereinrichtungen von einer anderen Steuereinrichtung (oder überhaupt ohne Steuereinrichtung im Sinne dieser Anmeldung) gesteuert werden kann.

Gemäß einem exemplarischen Ausführungsbeispiel kann die Vorrichtung eine Lerneinrichtung aufweisen, die zum Auffinden von Verhaltensmustern von zumindest einem Teil der Endnutzereinrichtungen und/oder des Energieversorgungsnetzes in der Vergangenheit und zum Bereitstellen aufgefundener Verhaltensmuster an die Steuereinrichtung als Basis für die zukünftige Steuerung eingerichtet ist. Indem Verhaltensmuster von Benutzern in der Vergangenheit aufgefunden werden (zum Beispiel erhöhter Warmwasserbereich werktags in der Früh und erhöhter elektrischer Strombedarf in der Küche an Werktagen mittags), kann eine zuverlässige Zukunftsprognose über die zu erwartenden Energieabnahmemengen abgegeben werden. Auch Besonderheiten des Energieversorgungsnetzes (zum Beispiel keine Erwartung von Solarenergie nachts) kann hierbei berücksichtigt werden, um eine Zukunftsprognose für die von dem Energieversorgungsnetz bereitstellbare Energie abzugeben. Solche empirisch begründeten Verhaltensmuster erlauben es, die Steuerung der Energieübertragung weiter zu verfeinern.

Gemäß einem exemplarischen Ausführungsbeispiel kann die Vorrichtung eine Voraussageeinrichtung aufweisen, die basierend auf Vorhersagedaten zum Voraussagen einer von dem Energieversorgungsnetz gegenwärtig und/oder in absehbarer Zukunft leistbaren Energieversorgungskapazität, insbesondere einer Energieknappheit oder eines Energieüberangebots, und zum Übermitteln eines Ergebnisses der Voraussage an die Steuereinrichtung als Basis für die zukünftige Steuerung eingerichtet ist. Die Voraussage einer zukünftig zu entwickelnden Energieabnahmemenge kann zum Beispiel basierend auf einer Wetterprognose abgegeben werden: Wird zum Beispiel anhaltende Windstille vorausgesagt, so dass in absehbarer Zeit mit einer Energieknappheit in einem windkraftbasierten Energieversorgungsnetz gerechnet werden kann, so kann die Steuereinrichtung die Energieentnahme aus dem volatilen Energieversorgungsnetz drosseln oder sogar Energie in dieses rückspeisen, um das Energieversorgungsnetz zu stabilisieren.

Gemäß einem exemplarischen Ausführungsbeispiel können die Vorhersagedaten zumindest eines aus der Gruppe enthalten, die besteht aus einer Wetterprognose, einer Wettervergangenheit, einem Datum, einer Jahreszeit, einer Tageszeit, einer Verbrauchserwartung, einem Sonnenstand, einer aus einer Verbrauchshistorie abgeleiteten Prognose eines zukünftigen Benutzerverhaltens, einer aus einer Verbrauchshistorie abgeleiteten Prognose anderer Energiebezieher, einer Benutzerpräsenzdetektion, einer vorgebbaren Benutzerpräferenz und einem Reservationsauftrag eines Benutzers.

Gemäß einem exemplarischen Ausführungsbeispiel kann die Steuereinrichtung eingerichtet sein, den zumindest einen Teil der Endnutzereinrichtungen derart zu steuern, dass einem gleichförmigen und/oder oszillierenden Einspeisen von Energie in das und/oder einem gleichförmigen und/oder oszillierenden Entnehmen von Energie aus dem Energieversorgungsnetz, insbesondere einem aufschaukelnden Einspeisen und/oder Entnehmen, synchron mit zumindest einem anderen Teil der Endnutzereinrichtungen entgegengewirkt wird. Zum Beispiel kann eine Steuereinheit eingerichtet sein, (allenfalls nach Abstimmung mit anderen Steuereinheiten) unterschiedliche Endnutzereinrichtungen mit einem Zeitversatz hinsichtlich Zeitkorridoren zum Energieentnehmen aus und/oder zum Energieeinspeisen in das Energieversorgungsnetz relativ zueinander zu steuern. Insbesondere können auch Phasen bzw. Intervalle der Energieentnahme eines Teils der Endnutzereinrichtungen mit Phasen bzw. Intervallen der Energieeinspeisung eines anderen Teils der Endnutzereinrichtungen zusammenfallend eingesteuert werden, um dann im Zeitverlauf eine möglichst neutrale Energiebilanz zu erhalten.

Gemäß einem exemplarischen Ausführungsbeispiel kann die Vorrichtung eine Aufzeichnungseinrichtung aufweisen, die zum Aufzeichnen von Daten eingerichtet ist, die indikativ für eine Zeit-Mengen-Charakteristik der von dem zumindest einen Teil der Endnutzereinrichtungen aus dem Energieversorgungsnetz entnommenen und/oder in das Energieversorgungsnetz eingespeisten Energie und/oder für eine in der Vergangenheit herrschende Netzqualitätscharakteristik des Energieversorgungsnetzes sind. Durch das Aufzeichnen historischer Daten kann eine Datenbasis geschaffen werden, die für zukünftige Voraussagemodelle oder das Erlernen vergangener Verhaltensmuster vorteilhaft eingesetzt werden können.

Gemäß einem exemplarischen Ausführungsbeispiel kann die Vorrichtung eine Kommunikationsschnittstelle zum Kommunizieren mit zumindest einer kommunizierfähig koppelbaren Entität (zum Beispiel das Energieversorgungsnetz, eine andere Vorrichtung und/oder eine Datenbereitstellungsentität zum Bereitstellen von für die Steuerung verwendbaren Daten) aufweisen. Insbesondere kann die Kommunikationsschnittstelle eingerichtet sein, der Sensoreinrichtung Daten zu übermitteln, die für die Menge von zwischen dem Energieversorgungsnetz und dem zumindest einen Teil der Mehrzahl von Endnutzereinrichtungen übertragener Energie indikativ sind. Indem die Vorrichtung kommunizierfähig mit anderen Entitäten ausgebildet wird, können für die Steuerung verwendbare Daten kommuniziert werden, welche die Genauigkeit der Steuerung weiter erhöhen. Insbesondere kann ein von der Sensoreinrichtung ermitteltes Sensorsignal in den Kommunikationsdaten enthalten sein. Zum Beispiel kann das Sensorsignal in einer Bitfolge kodiert sein, die über das Energieversorgungsnetz, gemeinsam mit dem Spannungsversorgungssignal, propagiert. Es kann aber auch ein anderes, drahtloses oder drahtgebundenes, Kommunikationsnetzwerk (zum Beispiel das Internet oder ein Mobilfunknetzwerk) für die unidirektionale oder bidirektionale Kommunikation eingesetzt werden. Des Weiteren kann das Energieversorgungsnetz gezielt gewisse Aspekte der Netzqualität beeinflussen und so die zu übertragenden Informationen kodieren. Dadurch ist ein effizienter Austausch von Informationen möglich, die simultan zur oder sogar als Teil der Ermittlung der Netzqualitätscharakteristik und/oder der Ermittlung der übertragenen Energiemenge mittels der Sensoreinrichtung erfasst werden können.

Gemäß einem exemplarischen Ausführungsbeispiel kann die Steuereinrichtung eingerichtet sein, die Menge von mittels zumindest einem Teil der Endnutzereinrichtungen aus dem Energieversorgungsnetz entnommener und/oder in das Energieversorgungsnetz eingespeister elektrischer Energie, insbesondere eines Zeitverlaufs der entnommenen und/oder eingespeisten Energie, basierend auf den detektierten Sensordaten zu steuern. Gemäß einem exemplarischen Ausführungsbeispiel kann die Sensoreinrichtung ferner eingerichtet sein, Sensordaten zu detektieren, die indikativ sind für eine Menge zwischen dem Energieversorgungsnetz und zumindest einem anderen Teil der Mehrzahl von Endnutzereinrichtungen übertragener Energie. Beide Komponenten der übertragenen Energie können somit in die Steuerung miteinbezogen werden.

Gemäß einem exemplarischen Ausführungsbeispiel kann zumindest ein Teil der Endnutzereinrichtungen eine Energiezwischenspeichereinrichtung, insbesondere eine selektiv aufladbare und entladbare Batterie, aufweisen. Auch eine Energiezwischenspeichereinrichtung, wie zum Beispiel ein wiederaufladbarer Akkumulator, die einer Endnutzereinrichtung zugeordnet sein kann, kann als Energiequelle zum zwischenzeitlichen Rückspeisen von Energie ins Energieversorgungsnetz verwendet werden, wenn die gegenwärtige Netzqualitätscharakteristik aufgrund starker Energienachfrage abgesunken ist oder abzusinken droht. In anderen Szenarien kann in der Energiezwischenspeichereinrichtung Energie aus einer Energieerzeugungseinheit einer Endnutzereinrichtung und/oder Energie aus dem Energieversorgungsnetz zwischengespeichert werden und/oder kann eine Energieverbraucheinheit einer Endnutzereinrichtung mit Energie der Energiezwischenspeichereinrichtung versorgt werden.

Gemäß einem exemplarischen Ausführungsbeispiel kann die Anordnung zumindest eine weitere Vorrichtung mit den oben beschriebenen Merkmalen zum Steuern der Übertragung von elektrischer Energie zwischen dem Energieversorgungsnetz und zumindest einem jeweiligen anderen Teil der Mehrzahl von Endnutzereinrichtungen aufweisen. Somit können mehrere Vorrichtungen mit den oben beschriebenen Merkmalen an das Energieversorgungsnetz angeschlossen sein und einzeln oder gruppenweise zum Steuern von Endnutzereinrichtungen konfiguriert sein.

Gemäß einem exemplarischen Ausführungsbeispiel können die Vorrichtung und die zumindest eine weitere Vorrichtung relativ zueinander und relativ zu dem Energieversorgungsnetz dezentral lokalisiert sein. Im Rahmen der vorliegenden Anmeldung wird unter dem Begriff "dezentral lokalisierte Vorrichtungen" insbesondere verstanden, dass die einzelnen Vorrichtungen nicht am selben Ort oder in einer zusammenhängenden Anlage positioniert sind, sondern voneinander räumlich weit entfernt und funktional getrennt sind. Von einer dezentralen Lokalisierung kann insbesondere dann gesprochen werden, wenn die einzelnen Vorrichtungen nicht zu einem gemeinsamen Gebäude oder zu einer gemeinsamen Anlage gehören. Ein Abstand der einzelnen dezentralen Vorrichtungen voneinander kann zum Beispiel größer als 100 m, insbesondere größer als 1 km, weiter insbesondere größer als 10 km sein.

Gemäß einem exemplarischen Ausführungsbeispiel kann eine Anzahl der Endnutzereinrichtungen höchstens 1000, insbesondere höchstens 100, weiter insbesondere höchstens 10 betragen. Die Endnutzereinrichtungen können Kleinanlagen sein, die an diversen Orten an das zentrale Energieversorgungsnetz angeschlossen sein können. Zum Beispiel kann jede der Vorrichtungen einem Gebäude zugeordnet sein, dessen Energieverwaltung die jeweilige Steuereinrichtung übernimmt.

Gemäß einem exemplarischen Ausführungsbeispiel kann die Anordnung einen zwischen dem Energieversorgungsnetz und der Vorrichtung angeordneten Mittelspannungstransformator aufweisen, wobei die Steuereinrichtung eingerichtet ist, einen Einfluss des Mittelspannungstransformators bei der Steuerung zu berücksichtigen. Aufgrund des auf der Niederspannungsseite des Mittelspannungstransformators angeordneten Vorsehens der Vorrichtungen können diese an Energieabnahmepositionen des Energieversorgungsnetzwerks angeordnet werden.

Gemäß einem exemplarischen Ausführungsbeispiel kann die Anordnung einen in einem elektrischen Pfad zwischen dem Energieversorgungsnetz und der Vorrichtung angeordneten Tapchanger (insbesondere ein Stufenschalter mit Transformator) aufweisen, der einen Transformator mit einer Primärspule und einer Sekundärspule aufweist, wobei an der Primärspule oder an der Sekundärspule eine Einrichtung zum insbesondere stufenweisen Verändern eines für ein Spannungstransformieren des Transformators wirksamen Teilabschnitts der Primärspule oder der Sekundärspule vorgesehen ist. Im Rahmen der vorliegenden Anmeldung wird unter dem Begriff "Tapchanger" also insbesondere eine Anordnung aus einem Stufenschalter und einem Transformator (insbesondere einem Leistungstransformator) verstanden, wobei der Stufenschalter zur Einstellung eines Übersetzungsverhältnisses des Transformators geschaltet werden kann. Der Tapchanger kann den zuvor angesprochenen Mittelspannungstransformator aufweisen. Vorteilhaft kann zudem eine Erkenneinrichtung vorgesehen werden, die eingerichtet ist, zum Beispiel basierend auf dem erfassten Sensorsignal das Vorliegen einer elektrischen Diskontinuität (insbesondere ein Spannungssprung in der Versorgungsspannung des Energieversorgungsnetzes) zu erkennen und basierend auf dem erfassten Sensorsignal ferner zu erkennen, ob (oder ob nicht) es sich hierbei um eine durch den Tapchanger erzeugte elektrische Diskontinuität handelt (oder ob die elektrische Diskontinuität eine andere Ursache hat). Gemäß einem solchen Ausführungsbeispiel ist ein System geschaffen, das das Auftreten von Signalartefakten auf einem Energieversorgungsnetz sensorisch detektieren kann und durch Signalauswertung zuordnen kann, ob ein solches Signalartefakt durch einen Umschaltvorgang eines Tapchangers veranlasst ist oder eine andere Ursache hat. Anders ausgedrückt kann ein solches System eine Klassifizierung vornehmen, welche Ursache eine detektierte elektrische Diskontinuität an einem Energieversorgungsnetz hat bzw. mit höchster Wahrscheinlichkeit hat. Die Steuerung der Energieverwaltung an der elektrischen Endnutzereinrichtung kann diese Information vorteilhaft verwenden, da insbesondere harmlose vorübergehende Störungen aufgrund eines Schaltvorgangs eines Tapchangers von kritischen längerfristigen Störungen (zum Beispiel verursacht durch eine vorübergehend verringerte Energieversorgungskapazität des Energieversorgungsnetzes) unterschieden werden können. Dadurch ist sichergestellt, dass eine Endnutzereinrichtung auf eine spezielle, durch Signalanalyse identifizierte Störung angemessen reagieren kann. Anders ausgedrückt kann durch die Kenntnis der Ursache einer solchen elektrischen Diskontinuität die steuerungstechnische Reaktion von einer oder mehreren elektronischen Komponenten der Endnutzereinrichtung auf eine solche elektrische Diskontinuität präziser vorgenommen werden.

Im Folgenden werden exemplarische Ausführungsbeispiele der vorliegenden Erfindung mit Verweis auf die folgenden Figuren detailliert beschrieben.
Figur 1 zeigt eine Anordnung zum Steuern der Übertragung von elektrischer Energie zwischen einem Energieversorgungsnetz und einer Mehrzahl von Endnutzereinrichtungen gemäß einem exemplarischen Ausführungsbeispiel der Erfindung.
Figur 2 zeigt einen Tapchanger der Anordnung gemäß Figur 1. Die dargestellten Spannungen sind exemplarisch. Der Tapchanger ist der Einfachheit halber nur einphasig dargestellt.
Figur 3 zeigt eine Anordnung zum Erfassen von Impedanzinformation als Netzqualitätscharakteristik in einem elektrischen Pfad zwischen einem Energieversorgungsnetz und einer elektrischen Endnutzereinrichtung gemäß einem exemplarischen Ausführungsbeispiel der Erfindung.
Figur 4 und Figur 5 zeigen weitere Schaltungen zum Erfassen von Impedanzinformation.
Figur 6 und Figur 7 zeigen Spannungs-Strom-Kennlinien zu den Schaltungen gemäß Figur 3 bis Figur 5.

Gleiche oder ähnliche Komponenten in unterschiedlichen Figuren sind mit gleichen Bezugsziffern versehen.

Bevor bezugnehmend auf die Figuren exemplarische Ausführungsbeispiele der Erfindung beschrieben werden, sollen noch einige allgemeine Aspekte der Erfindung erläutert werden:
Gemäß einem exemplarischen Ausführungsbeispiel ist eine dedizierte modularisierbare Vorrichtung zur Laststeuerung bzw. zum DSM (Demand Side Management) bereitgestellt.

Im Kontext von intelligenten Steuersystemen für Energieversorgungsnetze bekommt die dedizierte Steuerung auf der Verbraucherseite eine zunehmende Bedeutung. Zusätzlich werden die Steuerungen und Regelungen von autonomen Energieinseln zu einer neuen Herausforderung für den Systembau. Gemäß exemplarischen Ausführungsbeispielen können intelligente Subsysteme bereitgestellt werden, welche sich kooperativ verhalten, damit die erwarteten Effekte sich positiv kumulieren und nicht unerwünscht gegenseitig aufschaukeln.

Gemäß einem exemplarischen Ausführungsbeispiel kann eine Vorrichtung als DSM-System ausgebildet werden (insbesondere wenn sie auf Seite des Endverbrauchers installiert ist) und autonom und autark operieren. Dies bedeutet, dass die Vorrichtung ohne Verbindung zu einem übergeordneten steuernden System (insbesondere ohne Echtzeitkommunikation) in der Lage ist, einen oder mehrere Verbraucher zu steuern. Dies kann insbesondere derart erfolgen, dass eine kombinatorische oder prioritätsgesteuerte Berücksichtigung von Benutzerbedürfnissen und Netzversorgungsoptimierungen des Energieversorgungsnetzes möglich ist.

Der Einsatz von elektronischen Mittelspannungstransformatoren macht es für Konzepte der autonom (und ohne Echtzeitkommunikation) arbeitenden DSM-Systeme (vor allem wenn sie beim Endverbraucher installiert sind) unmöglich, den Netzzustand an der Hinterseite des elektronischen Transformators festzustellen und auf Netzbedürfnisse hinter dem elektronischen Transformator zu reagieren ("hinter" ist dabei auf die Sicht des Endverbrauchers bezogen, also in Richtung Mittelspannungsnetz und Hochspannungsversorgung). Insbesondere bei der Konfiguration eines Mittelspannungstransformators mit Tapchanger-Funktionalität ist es gemäß exemplarischen Ausführungsbeispielen der Erfindung vorteilhaft, gegebenenfalls auftretende elektrische Diskontinuitäten (zum Beispiel Spannungssprünge) dahingehend zu analysieren, ob es sich hierbei um steuerungstechnisch harmlose Spannungssprünge aufgrund eines Schaltvorgangs eines Tapchangers oder um steuerungstechnisch kritische Spannungssprünge aufgrund einer Veränderung der Netzqualität (zum Beispiel einer Energieversorgungsknappheit in dem Energieversorgungsnetz) handelt. Durch eine entsprechende Unterscheidungslogik (die zum Beispiel basierend auf Mustererkennung, eine Analyse der Höhe eines Spannungssprungs und/oder Methoden der künstlichen Intelligenz) zum Ermitteln des Ursprungs einer elektrischen Diskontinuität kann die Steuerung entsprechend verfeinert werden (insbesondere kann die Steuereinrichtung eine elektrische Diskontinuität ignorieren, wenn diese auf einen Schaltvorgang eines Tapchangers zurückgeht; dagegen kann die Steuereinrichtung die Energieübertragung anpassen, wenn eine elektrische Diskontinuität auf einer Veränderung der Netzqualität beruht).

Eine DSM-Steuerung gemäß einem exemplarischen Ausgangsbeispiel der Erfindung kann entsprechend einer Priorisierung von Benutzerbedürfnissen gegenüber Bedürfnissen eines Energieversorgungsnetzes operieren. Alternativ ist eine kombinatorische oder gewichtete Berücksichtigung von Bedürfnissen der Endnutzereinrichtungen und des Energieversorgungsnetzes möglich.

Selbst wenn dezentrale DSM-Systeme in großer Zahl parallel betrieben werden, können parallel ausgeführte individuelle Steuerungsschritte derart aufeinander abgestimmt werden, dass diese nicht unerwünscht kumulieren, so dass es zu keinem massiven Über- oder Unterschwingen bzw. Über- oder Unterregeln kommt. Dadurch kann verhindert werden, dass es im Extremfall zu einer selbst erregten Dauerschwingung von versuchten vermeidlichen Stabilisierungseingriffen kommt, welche den Netzzustand verschlimmern (statt verbessern) und im Extremfall zu einem Blackout führen können. Die Betriebssicherheit kann durch das Unterdrücken solcher Effekte verbessert werden.

In die Steuerungslogik gemäß einem exemplarischen Ausgangsbeispiel der Erfindung kann ein kooperativer Ansatz implementiert werden, so dass mehrere Steuereinrichtungen ohne negative Beeinflussung parallel (und ohne Realtimekommunikation) nebeneinander betrieben werden können.

Bestehende DSM steuern Lasten durch bloßes Ein- und Ausschalten. Diese grobe Granularität erlaubt häufig nicht eine maximale Auslastung eines Hausanschlusses zu erreichen: Mit ausgeschalteter Last ist der Energiebezug deutlich zu tief, mit eingeschalteter Last ist der Stromverbrauch über dem Maximalwert der Hauptsicherung. Exemplarische Ausführungsbeispiele der Erfindung überwinden diesen Nachteil durch die Möglichkeit stufenweiser oder stufenloser Anpassungen der Energieübertragung.

Im Unterschied zu herkömmlichen DSM-Systemen wird gemäß einem exemplarischen Ausgangsbeispiel der Erfindung eine DSM-Architektur bereitgestellt, welche die Fähigkeit hat, autonom und autark zu entscheiden, welche (insbesondere im Sinne einer Optimierung des Betriebs eines Energieversorgungsnetzes) momentanen Aktionen dienlich sind. Solche autonomen oder autarken Systeme gemäß exemplarischen Ausführungsbeispielen sind ferner in der Lage, Benutzerbedürfnisse gegenüber den Bedürfnissen des Energieversorgungsnetzes gewichtet zu steuern. Des Weiteren können Systeme gemäß exemplarischen Ausführungsbeispielen der Erfindung so konzipiert sein, dass sie sich selbst bei hohem Parallelbetrieb (d.h. viele gleiche oder gleichartige Geräte befinden sich parallel am Energieversorgungsnetz) nicht unerwünscht aufschaukeln können. Unterschiedliche Steuereinrichtungen können ferner eine Kooperativiät bieten. Der Begriff "Kooperativiät" kann in diesem Zusammenhang bedeuten, dass das Zusammenwirken mehrerer paralleler Einzelsysteme abgestimmt erfolgt.

Durch Kombination von verschiedenen Sensorikkomponenten lässt sich die Netzqualität, die Netzimpedanz, ein Leistungsparameter der angeschlossenen gesteuerten sowie der unabhängigen Verbraucher, das Benutzerverhalten, die Auslastung des Hausanschlusses (insbesondere in Relation zur maximalen Auslegung desselben), die maximal mögliche und aktuell stattfindende Rückspeiseleistung und/oder gegebenenfalls eine vorhandene Speicherreserve in Batterien messen. Aus der Aufzeichnung der Historie dieser Daten und gegebenenfalls zusätzlicher Zukunftsprognosen (zum Beispiel Wettervorhersagen) lassen sich (zum Beispiel mittels selbstlernenden Mechanismen) heuristische Prognosen erstellen, welche Benutzerbedürfnisse, Zeitpunkt und Höhe von zukünftigem Energieverbrauch und Energieangebot, gebäudeinternen Wärme- und/oder Kältebedarf und gebäudeinterne Wärme- und/oder Kältespeicherkapazitäten umfassen. Gemäß einem exemplarischen Ausführungsbeispiel gewichtet ein Multifaktormodel diese verschiedenen Faktoren und entscheidet über Menge und Zeitpunkt von Energiebezug für speicherbare Energien (zum Beispiel Batterien für eMobility-Anwendungen), direkte oder indirekte Energiezuführung, bei welcher das Gebäude selbst als Speicher betrachtet werden kann (oder gebäudeinterne Energiezwischenspeicher wie Boiler, Ladespeicher von Wärmepumpen vorgesehen werden können). Eine entsprechende Entscheidungsmatrix dient bei einem exemplarischen Ausführungsbeispiel der Erfindung auch zum Treffen von Entscheiden für Rückspeiseleistung vom Endverbraucher ins Energieversorgungsnetz zurück.

Durch eine Modularisierung der verschiedenen, gemäß exemplarischen Ausführungsbeispielen der Erfindung eingesetzten Sensorikkomponenten (zum Beispiel Netzimpedanzmessung) und mittels einer kommunikationsmäßigen Verbindung zwischen den Modulen lässt sich die Gesamtfunktionalität dezentralisieren. In Bezug auf einen elektronischen Mittelspannungstransformator lässt sich so auf der vom Endverbraucher aus gesehen entfernten Seite des Transformators eine Sensorikkomponente einsetzen, welche die relevanten Messdaten erhebt und (gegebenenfalls in Echtzeit) dem DSM-System auf der Endverbraucherseite mitteilt. Dabei kann entweder auf Kommunikationsmittel der Datenverarbeitung (zum Beispiel Web, Internet, WiFi, DSL, GSM, deren Nachfolgeprotokolle) zurückgegriffen werden, aber auch auf Endverbraucherseite des elektronischen Transformators die Netzqualität oder Netzimpedanz zur Informationsübertragung beeinflusst und somit zur Informationskodierung des hintenliegenden Netzzustandes verwendet werden.

Durch Gewichtungsparameter des erwähnten Multifaktormodells ist es möglich, entweder die Benutzerbedürfnisse oder die Bedürfnisse des Energieversorgungsnetzes zu bevorzugen, und gegebenenfalls eine Abrechnungsbasis zu erstellen (und kommunikationsmäßig weiterzuleiten), um vom Benutzer eingegangene Komfortverzichte abzugelten. Des Weiteren kann ein Benutzer durch ein portables Endnutzergerät bzw. eine andere abgesetzte Kontrolleinheit (zum Beispiel ein Mobiltelefon oder ein Tablet) mittels eines Programm-Moduls (insbesondere einer App) diese Parameter und weitere Betriebsfunktionen ferngesteuert lesen und modifizieren. Bei Bedarf kann für diese Kommunikation eine gesicherte Verbindung verwendet werden oder der Zugriff unter Verwendung von Passwörtern und/oder mit kryptografischen Hilfsmitteln gesichert werden.

Durch Einbau von Filtern und zeitlichen Regelungsdifferenzierungen (zum Beispiel dass jedes System erst nach einer zufälligen Verzögerungszeit mit dem Regeln beginnt, aber vorher nochmals testet, ob nicht bereits andere Systeme mit Aktionen begonnen haben, wobei diese Feststellung zum Beispiel indirekt über die Netzqualität und Netzimpedanz getroffen werden kann) kann verhindert werden, dass es zu Über- oder Unterschwingen bzw. zu Aufschaukelungseffekten kommt.

Eine Konzeptionierung des erwähnten Parallelbetriebs gemäß einem exemplarischen Ausführungsbeispiel die Erfindung erlaubt auch den Einsatz von mehreren parallelen Steuersystemen im Haushalt des Endverbrauchers. Bei einer räumlichen Nähe der Systeme lässt sich die Kooperation noch einen Schritt weiter optimieren: Gleichartige Systeme können untereinander Messgrößen gemeinsam nutzen, darauf basierende Maßnahmen koordinieren und gegebenenfalls Ressourcen teilen (zum Beispiel maximale Leistung am Hausanschluss gemeinsam aufteilen). Solche Maßnahmen führen einerseits zu einer Modularität der einzelnen systemrelevanten Komponenten, andererseits aber auch zu einer höheren Verfügbarkeit des Gesamtsystems, weil Redundanzen gezielt mehrfach genutzt werden können.

Gemäß einem exemplarischen Ausführungsbeispiel der Erfindung kann durch Vorgabe eines Leistungswertes die Steuereinrichtung bzw. die Vorrichtung die Menge der bezogenen oder zurückgespeisten Leistung an eine Verbrauchersteuerung weitergeben. Dies erlaubt eine besonders fein auflösende Lastverteilung bzw. Einspeiseregelung. Insbesondere bei der erwähnten Ressourcenaufteilung stellt diese Variante (im Gegensatz zur zeitlich sequenziellen Laststeuerung, d.h. ein Verbraucher nach dem anderen wird mit Strom versorgt) eine Möglichkeit dar, mit der sich auch bei Wärmepumpen Optimierungen im Gesamtwirkungsgrad erreichen lassen, da in der Übergangszeit die Wärmebezugsmenge im Sinne einer Leistungseffizienz optimiert werden kann.

Gemäß einem exemplarischen Ausführungsbeispiel der Erfindung kann die Vorrichtung als separater autonomer und autarker Kontroller ausgebildet werden, ggf. ohne Kommunikationsanbindung nach außen. Gegebenenfalls können Betriebsparameter via Netzwerke oder Speicherkarten ausgetauscht werden.

Gemäß einem anderen exemplarischen Ausführungsbeispiel der Erfindung kann die Vorrichtung als verteiltes System ausgeführt werden, bei welchem Teilsysteme an unterschiedlichen Orten platziert werden können. Dies umfasst auch strategisch relevante geografische Lokationen: zum Beispiel Verteilkabine einer Niederspannungsverteilung zur Unterbringung von Sensoren, oder Stromsensoren bei der Hauptsicherung des Endverbrauchers. Des weiteren können Sensorikkomponenten derart ausgeführt sein, dass sie die datenmäßige Isolation durch einen elektronischen Niederspannungstrafo überbrücken.

Gemäß noch einem anderen exemplarischen Ausführungsbeispiel können Systemteile eine intelligente Steuerung bilden und/oder die Funktionen einer intelligenten Steuerung nutzen.

Gemäß einem weiteren exemplarischen Ausführungsbeispiel kann die Vorrichtung als Server ausgeführt sein, der über ein Frontend, das zum Beispiel Apps auf einem Smartphone bedient oder eine Browseroberfläche bietet, die Interaktion mit dem Benutzer ermöglicht und so die zum Beispiel empirisch ermittelten und in eine heuristische Prognose umgewandelten Benutzerbedürfnisse im Sinne einer Parametrierung angepasst werden können.

Gemäß noch einem anderen Ausführungsbeispiel kann die Vorrichtung als eingebetteter Teil in einem Drittsystem (zum Beispiel Wechselrichter, Batterieladegerät, Boiler- und/oder Heizungssteuerung, etc.) eingerichtet sein.

Es ist auch möglich, die Vorrichtung als vorgeschalteten Teil eines Drittsystems (zum Beispiel Wechselrichter, Batterieladegerät, Boiler- und/oder Heizungssteuerung, etc.) zu konfigurieren.

Gemäß einem Ausführungsbeispiel ist es möglich, durch Vorgabe eines Leistungswertes die Steuereinrichtung zur Weitergabe der Menge der bezogenen oder zurückgespeisten Leistung an die Verbrauchersteuerung anzusteuern. Insbesondere ist es auch möglich, einen idealen Leistungsbezugsbereich vorzugeben. Dies kann wiederum bei einer Steuerung von Wärmepumpen dafür eingesetzt werden, um eine Wärmepumpe im optimalen Leistungsbereich zu betreiben. Die Übertragung an den Verbraucher kann mittels digitaler Kommunikation erfolgen, aber auch mittels analoger Steuersignale (zum Beispiel 0-10V, 20 mA, etc.), mittels Phasenanschnitt- und/oder Phasenabschnittsteuerung oder mittels einer Pulsweitenmodulation.

Gemäß einem exemplarischen Ausführungsbeispiel der Erfindung ist ein Verfahren und/oder eine Steuerungs- und/oder Regelungseinheit (Controller) geschaffen, wobei eine Einrichtung zur Messung von einzelnen oder allen Werten der Netzqualität und/oder der Netzimpedanz des Stromnetzes und eine direkte (elektrische Leistung) oder indirekte (zum Beispiel Temperaturveränderung) Messung des Energieverbrauchs vorhanden ist. Mittels einer integrierten Steuerung können autonome und/oder dezentrale und/oder hierarchieunabhängige Entscheide gefällt werden, die wiederum einen Energietransfer (Bezug und/oder Speicherung und/oder Einspeisung von Energie) steuern. Es ist ferner möglich, dass das Gesamtsystem in einzelne Module aufteilbar ist, welche dezentral installiert sein können. Gemäß einem exemplarischen Ausführungsbeispiel können Mechanismen vorgesehen werden, welche ein Aufschaukeln und/oder Schwingen verhindern oder unterdrücken, wenn mehrere Vorrichtungen oder Endnutzereinrichtungen parallel betrieben werden. Gemäß einem Ausführungsbeispiel der Erfindung kann das System an der Endverbraucherstelle eines Stromnetzes installiert sein. Gegebenenfalls benötigte oder gewünschte Hilfsinformationen kann von einer geräteinternen oder näher beim oder im Energieversorgungsnetz installierten Sensorik bereitgestellt werden. Gemäß einem Ausführungsbeispiel kann das System zeitliche Verlaufsaspekte berücksichtigen. Das System kann ferner eine Schwankungshistorie der Netzqualitäts- und/oder Netzimpedanzwerte aufzeichnen. Diese Messwerte können intern verwendet und/oder extern zur Verfügung gestellt werden. Vorzugsweise zeichnet das System ein Verbraucherverhalten auf. Auch diese Messwerte können intern verwendet und/oder extern zur Verfügung gestellt werden. Darüber hinaus kann gemäß einem Ausführungsbeispiel der Erfindung ein System (das offline autonom funktioniert und keinen Realtimebedarf hat) Daten asynchron hoch- und herunterladen. Einzelne Teilsysteme können örtlich abgesetzt sein und/oder einzelne Teilsysteme können von verschiedenen Systemen gemeinsam genutzt werden.

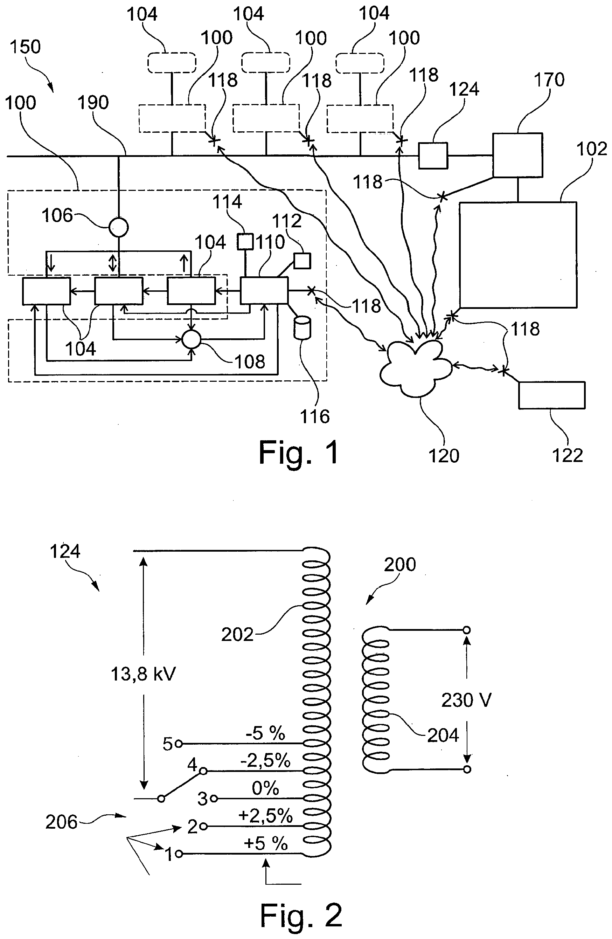

**Figur 1** zeigt eine Anordnung 150 mit Vorrichtungen 100 zum Steuern der Übertragung von elektrischer Energie zwischen einem Energieversorgungsnetz 102 und einer Mehrzahl von Endnutzereinrichtungen 104 gemäß einem exemplarischen Ausführungsbeispiel der Erfindung.

Die gemäß Figur 1 ganz links dargestellte und der entsprechenden Vorrichtung 100 zugeordnete Endnutzereinrichtung 104 ist eine Energieverbraucheinheit (zum Beispiel eine Fußbodenheizung eines Gebäudes, dessen Energiesteuerung die Vorrichtung 100 übernimmt), die aus dem Energieversorgungsnetz 102 mit elektrischer Energie versorgt wird (siehe den nach unten gerichteten Pfeil, der die Richtung des Energieflusses anzeigt).

Die gemäß Figur 1 mittlere und der beschriebenen Vorrichtung 100 zugeordnete Endnutzereinrichtung 104 ist eine Energiezwischenspeichereinheit (zum Beispiel eine wiederaufladbare Batterie), die wahlweise aus dem Energieversorgungsnetz 102 mit elektrischer Energie versorgt wird oder in ihr zwischengespeicherte Energie in das Energieversorgungsnetz 102 einspeist (siehe den Doppelpfeil).

Die gemäß Figur 1 ganz rechts dargestellte und der beschriebenen Vorrichtung 100 zugeordnete Endnutzereinrichtung 104 ist eine Energieerzeugungseinheit (zum Beispiel eine Solaranlage des Gebäudes), die in das Energieversorgungsnetz 102 elektrische Energie einspeisen kann (siehe den nach oben gerichteten Pfeil, der die Richtung des Energieflusses anzeigt).

Die Anordnung 150 ist unter anderem gebildet aus dem Energieversorgungsnetz 102, den mehreren Endnutzereinrichtungen 104 und mehreren Vorrichtungen 100 zum Steuern der Übertragung von elektrischer Energie zwischen dem Energieversorgungsnetz 102 und einem jeweiligen zugeordneten Teil der Endnutzereinrichtungen 104.

Zur übersichtlicheren Darstellung ist nur für eine der Vorrichtungen 100 in Figur 1 der detaillierte innere Aufbau gezeigt. Dieser Vorrichtung 100 ist eine Sensoreinrichtung 106, 108, 170 zugeordnet, die eingerichtet ist, Sensordaten zu detektieren, die indikativ sind für eine Menge zwischen dem Energieversorgungsnetz 102 und den drei der Vorrichtung 100 zugeordneten Endnutzereinrichtungen 104 übertragener Energie und für eine Netzqualitätscharakteristik des Energieversorgungsnetzes 102 insgesamt. Genauer gesagt wird ein Zeitverlauf der Netzqualität des Energieversorgungsnetzes 102 sensorisch erfasst. Dieser Zeitverlauf des die Netzqualität anzeigenden Signals (vorzugsweise ein Spannungsverlauf oder ein Stromverlauf unter allenfalls variablen Lastbedingungen) sowie eine erste und/oder zweite Ableitung dieses Signals nach der Zeit werden einer Steuereinrichtung 110 als Basis für eine Steuerung des Energiemanagements der zugeordneten Endnutzereinrichtungen 104 übermittelt.

Die Netzqualität wird dabei zum einen durch eine erste Sensoreinheit 106 der Sensoreinrichtung 106, 108, 170 ermittelt, wobei die erste Sensoreinheit 106 direkt an die Stromleitung 190 des Energieversorgungsnetzes 102 angeschlossen ist und ein für die globale Netzqualität indikatives Signal erfasst. Eine zweite Sensoreinheit 108 der Sensoreinrichtung 106, 108, 170 erfasst lokal an der jeweiligen Position der einzelnen Endnutzereinrichtungen 104 die Netzqualität und übermittelt die entsprechenden Signale ebenfalls an die Steuereinrichtung 110. Darüber hinaus ist eine energieversorgungsnetzseitige weitere Sensoreinheit 170 bereitgestellt, die zwischen dem Energieversorgungsnetz 102 und einem Tapchanger 124 mit Mittelspannungstransformator angeordnet ist und an dieser Position die Netzqualität erfasst. Das Vorsehen einer weiteren Sensoreinheit 170 auf einer Seite des Tapchangers 124, die der Vorrichtung 100 abgewandt und dem Energieversorgungsnetz 102 zugewandt ist, hat den großen Vorteil, dass die Netzqualität auch an einer Stelle ermittelt werden kann, die für die vorrichtungsseitig angeordneten Sensoreinheiten 106, 108 aufgrund der spannungsmodifizierenden Wirkung des Transformators des Tapchangers 124 quasi unsichtbar ist. Die von der Sensoreinheit 170 erfassten Messsignale sind daher besonders aussagekräftig für eine mögliche vorübergehende Überkapazität oder Unterkapazität hinsichtlich der Menge der von dem Energieversorgungsnetz 102 bereitstellbaren Energie.

Es ist anzumerken, dass von der Sensoreinrichtung 106, 108, 170 erfasste Impedanzinformation (also Information betreffend die Impedanz des Energieversorgungsnetzes 102 oder eines Teils davon) sich als besonders aussagekräftige Form der Netzqualitätscharakteristik erwiesen hat, auf deren Basis eine Steuereinrichtung 110 einen unidirektionalen oder bidirektionalen Energiefluss vom bzw. zum Energieversorgungsnetz 102 besonders präzise einsteuern kann (siehe hierzu auch Figur 2 bis Figur 7).

Vorteilhaft kann die Kommunikationsschnittstelle 118 eingerichtet sein, der Sensoreinrichtung 106, 108, 170 Daten zu übermitteln, die für die Menge zwischen dem Energieversorgungsnetz 102 und dem zumindest einen Teil der Mehrzahl von Endnutzereinrichtungen 104 übertragener Energie indikativ ist. Zum Beispiel kann über die Kommunikationsschnittstelle 118 von den jeweils anderen Vorrichtungen 100 die Information empfangen werden, welche Energie diese gegenwärtig dem Energieversorgungsnetz 102 entnehmen.

Darüber hinaus weist diese Vorrichtung 100 die als Prozessor ausgebildete Steuereinrichtung 110 auf, die eingerichtet ist, die Menge übertragener elektrischer Energie basierend auf den detektierten Sensordaten zu steuern. Zeigen die Sensordaten zum Beispiel an, dass das Energieversorgungsnetz 102 gegenwärtig überlastet ist, so kann die Energieentnahme durch die Energieverbraucheinheiten der zugeordneten Endnutzereinrichtungen 104 zeitweise reduziert werden, um das Energieversorgungsnetz 102 zu stabilisieren. Optional kann in dem beschriebenen Szenario zudem Energie von einer Energiezwischenspeichereinheit oder einer Energieerzeugungseinheit der zugeordneten Endnutzereinrichtungen 104 in das Energieversorgungsnetz 102 eingespeist werden. Zeigen dagegen die Sensordaten an, dass das Energieversorgungsnetz 102 gegenwärtig eine Überkapazität bereitstellbarer Energie hat, so kann die Steuereinrichtung 110 ihre Endnutzereinrichtungen 104 dahingehend ansteuern, dass dem Energieversorgungsnetz 102 möglichst viel Energie entnommen wird, zum Beispiel zum Versorgen einer Energieverbrauchseinheit und/oder zum Aufladen einer Energiezwischenspeichereinrichtung.

Jeder der Vorrichtungen 100 kann eine oder mehr Energieverbrauchseinheiten und/oder eine oder mehr Energiezwischenspeichereinheiten und/oder eine oder mehr Energieerzeugungseinheiten zugeordnet sein. Jede der Endnutzereinrichtungen 104 kann (direkt oder indirekt über die jeweilige Vorrichtung 400) an eine Stromleitung 190 des Energieversorgungsnetzes 102 angeschlossen sein.

Obgleich dies in Figur 1 nicht gezeigt ist, kann jeder der Vorrichtungen 100 eine jeweilige Steuereinrichtung 110 zugeordnet sein. Jede dieser Steuereinrichtungen 110 ist eingerichtet, das Steuern autonom von und kooperierend mit den anderen Steuereinrichtungen 110 durchzuführen. Dies bedeutet, dass jede Steuereinrichtung 110 allein entscheiden kann, wann wieviel Energie die ihr zugeordnete(n) Endnutzereinrichtung(en) 104 dem Energieversorgungsnetz 102 entnimmt und wann wieviel Energie in das Energieversorgungsnetz 102 eingespeist wird. Um durch ein nicht abgestimmtes gleichförmiges Verhalten unterschiedlicher Vorrichtungen 100 hervorgerufene unerwünschte Aufschaukelungseffekte zu vermeiden, ist jede Vorrichtung 100 mit einer Kommunikationsschnittstelle 118 zum Kommunizieren mit den jeweiligen anderen Vorrichtungen 100, dem Energieversorgungsnetz 102, einer globalen Sensoreinrichtung 170 sowie einem Webdienst als Beispiel für eine Datenbereitstellungsentität 122 über ein Kommunikationsnetzwerk 120 (zum Beispiel das Internet oder ein Mobilfunknetz) eingerichtet. Insbesondere können dadurch die Vorrichtungen 100 untereinander ihr Verhalten abstimmen, zum Beispiel vorrichtungsbezogene Energieentnahmezeiträume sowie Energieeinspeisezeiträume koordinieren.

Die Steuereinrichtung 110 ist ferner mit einer Lerneinrichtung 112 der Vorrichtung 110 gekoppelt, die zum Auffinden von Verhaltensmustern der zugeordneten Endnutzereinrichtungen 104 und des Energieversorgungsnetzes 102 in der Vergangenheit und zum Bereitstellen aufgefundener Verhaltensmuster an die Steuereinrichtung 110 als Basis für die zukünftige Steuerung eingerichtet ist. Ferner die Steuereinrichtung 110 mit einer Voraussageeinrichtung 114 der Vorrichtung 100 gekoppelt, die basierend auf Vorhersagedaten zum Voraussagen einer von dem Energieversorgungsnetz 102 gegenwärtig oder in absehbarer Zukunft leistbaren Energieversorgungskapazität und zum Übermitteln eines Ergebnisses der Voraussage an die Steuereinrichtung 110 als Basis für die zukünftige Steuerung eingerichtet ist. Die Vorhersagedaten können zum Beispiel eine Wetterprognose enthalten, die über das Kommunikationsnetz 120 von dem Webdienst 122 erhalten werden kann. Ist sonniges Wetter angesagt, so ist zu erwarten, dass das als Fotovoltaikanlage ausgebildete Energieversorgungsnetz 102 in nächster Zeit viel Energie liefern wird. Ist windstilles Wetter angesagt, so ist zu erwarten, dass das als Windkraftanlage ausgebildete Energieversorgungsnetz 102 in nächster Zeit wenig Energie liefern wird. Solche Vorhersagedaten kann die Steuereinrichtung 110 somit in ihre Steuerung des Energiemanagements der Endnutzereinrichtungen 104 mit einbeziehen.

Eine zum Beispiel als Datenbank, die in einem Massenspeicher der Vorrichtung 100 gespeichert ist, ausgebildete Aufzeichnungseinrichtung 116 dient dem Aufzeichnen von Daten (alternativ können dies auch einfache Dateien sein), die indikativ für eine Zeit-Mengen-Charakteristik der von den zugeordneten Endnutzereinrichtungen 104 aus dem Energieversorgungsnetz 102 entnommenen und in das Energieversorgungsnetz 102 eingespeisten Energie und für eine in der Vergangenheit herrschende Netzqualitätscharakteristik des Energieversorgungsnetzes 102 sind.

Gemäß Figur 1 sind also viele Vorrichtungen 100 an ein und dasselbe Energieversorgungsnetz 102 angeschlossen. All diese Vorrichtungen 100, mit Ausnahme der allen Vorrichtungen 100 gemeinsam zugeordneten Sensoreinheit 170, sind stromabwärts (d.h. in Richtung Endverbraucher bzw. niederspannungsseitig) des Tapchangers 124 positioniert. Über jeweilige drahtlose Kommunikationsschnittstellen 118 können die jeweiligen Vorrichtungen 100 über das Kommunikationsnetzwerk 120 miteinander kommunizieren. Alternativ kann die Information der Sensoreinheit 170 auch als Netzqualitätsmerkmal der Versorgungsspannung auf der Stromleitung 190 beigefügt oder im Sinne eines Rundsteuersignals verteilt werden. Auch Datenbereitstellungsentitäten 122, zum Beispiel eine Wettervorhersageserviceeinrichtung, können über das Kommunikationsnetzwerk 120 mit den Vorrichtungen 100 gekoppelt sein. Auch das Energieversorgungsnetz 102 kann an dieser kommunikativen Kopplung beteiligt sein.

Globale Sensoreinheiten 106, 170 detektieren die jeweilige an ihrer Position herrschende Netzqualitätscharakteristik (stromaufwärts und stromabwärts des Tapchangers 102) und übermitteln diese der Steuereinrichtung 110. Die vorrichtungslokale Sensoreinheit 108 erfasst die Energiemenge, die von Endnutzereinrichtungen 104 von dem Energieversorgungsnetz 102 abgenommen werden oder in das Energieversorgungsnetz 102 eingespeist werden.

Die Steuereinrichtung 110 ermittelt basierend auf den mittels der Sensoreinrichtung 106, 108, 170 ermittelten Daten, welche Menge die mit ihr verbundenen Endnutzereinrichtungen 104 aus dem Energieversorgungsnetz 102 entnehmen sollen bzw. in das Energieversorgungsnetz 102 einspeisen sollen. Die Aufzeichnungseinrichtung 116, die Vorhersageeinrichtung 114 und die Lerneinrichtung 112 können die Steuereinrichtung 110 hierbei unterstützen.

**Figur 2** zeigt einen Tapchanger 124, wie er in der Anordnung 150 gemäß Figur 1 zum Einsatz kommen kann.

Der Tapchanger 102 umfasst einen Transformator 200 mit einer Primärspule 202 und einer Sekundärspule 204 mit unterschiedlicher Windungszahl. An der Primärspule 202, die energieversorgungsnetzseitig angeordnet bzw. verschaltet werden kann, ist eine Einrichtung 206 zum stufenweisen (im gezeigten Beispiel 2,5 % der Primärwindungen pro Stufe) Verändern eines für ein Spannungstransformieren des Transformators 200 wirksamen Teilabschnitts der Primärspule 202 vorgesehen. Die Niederspannungs- oder Sekundärseite des Tapchangers 124 kann endnutzereinrichtungsseitig angeordnet bzw. verschaltet sein.

Anhand von Figur 2 ist zu erkennen, dass die Größe der Spannungssprünge beim Umschalten des Tapchangers 124 durch die Größe der Stufen an der Einrichtung 206 festgelegt sind. Die Größe der erwarteten Spannungssprünge beim Schalten des Tapchangers 124 können einer Erfasseinrichtung oder der Steuereinrichtung 110 bekannt sein und bei der Ermittlung des Ursprungs eines Spannungssprungs als elektrische Diskontinuität vorteilhaft als zuverlässiges Zuordnungskriterium eines Spannungssprungs zu dem Tapchanger 124 verwendet werden. Der gezeichnete Tapchanger 124 ist exemplarisch (häufig werden Tapchanger mit 5 bis 24 Anzapfpunkten verwendet).

Im Weiteren wird ein zusätzlicher Aspekt gemäß exemplarischen Ausführungsbeispielen der Erfindung beschrieben, der sich auf die Durchführung einer Impedanzmessung und einer Analyse der zeitlichen Varianz im Zusammenhang mit der Erfassung eines Netzqualitätsparameters bzw. der Netzqualitätscharakteristik befasst.

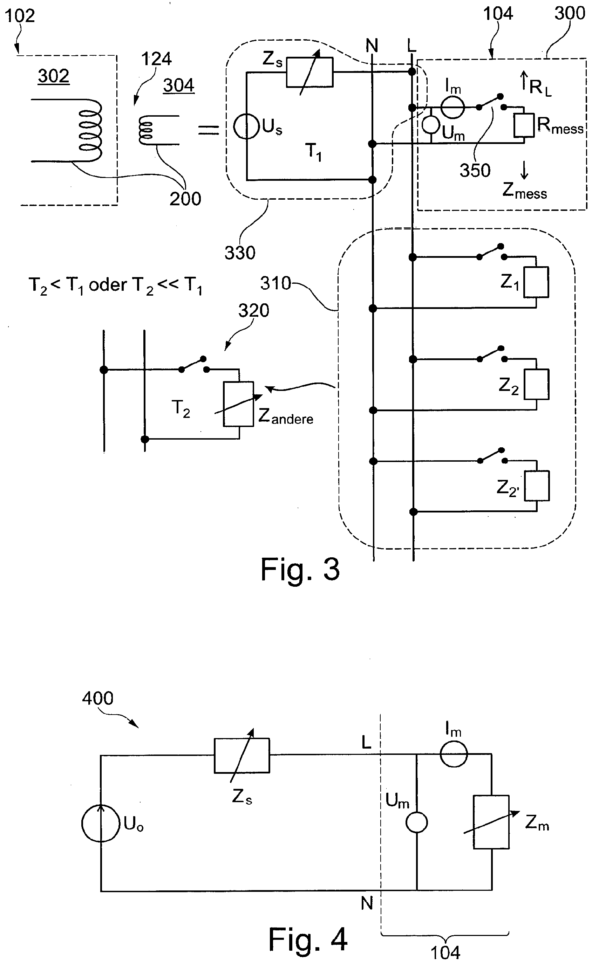

Zunächst können die beiden folgenden Aspekte der Impedanzmessung und deren Datenverwendung erfindungsgemäß implementiert werden:
1. Messung der Impedanz als Funktion der Frequenz: Dadurch wird abschätzbar, wie und welche Kommunikation über die Netzversorgungsleitungen möglich ist oder welche Störungen (zum Beispiel Messung der Dämpfung von harmonischen Oberwellen des Spektrums) im lokalen System vorhanden sind.
2. Messung der Impedanz (insbesondere bei Netzfrequenz 50/60 Hz oder 16.666/400 Hz in Sondernetzen) zur Bestimmung des in Figur 3 gezeigten Innenwiderstandes Zₛ des Niederspannungsteils der Stromleitung 190 des Energieversorgungsnetzes 102: Dadurch kann zum Beispiel sichergestellt werden, dass auf der Endverbraucherseite im Rahmen vorgesehener Energiebezugsmengen keine Unterspannung (d.h. insbesondere weniger als Nennspannung minus 10%) und bei Energieeinspeisung (Fotovoltaikanlagen, Windkraftanlage, Blockheizkraftwerk, etc.) keine Überspannung (das heißt insbesondere mehr als Nennspannung +6% oder +10%, je nach angewandter Norm) auftreten.

Gemäß einer weiteren, im Rahmen bevorzugter exemplarischer Ausführungsbeispiele der Erfindung vorteilhaft implementierbaren Art der Impedanzmessung ist die 2. obige Form dahingehend erweitert, dass die Quellenimpedanz und Nennspannung in ihrer zeitlichen Veränderung ermittelt und aufgezeichnet werden, sowie die Impedanz mit unterschiedlichen Messlasten (Rmess) ermittelt wird. Dadurch ergibt sich für eine einzelne Versorgungsquelle vom Energieversorgungsnetz 102 her nur eine Messstation beim Verbraucher (siehe Bezugszeichen 300 in Figur 3).

**Figur 3** zeigt eine Anordnung zum Erfassen von Impedanzinformation als Netzqualitätscharakteristik in einem elektrischen Pfad zwischen Energieversorgungsnetz 102 und einer (oder mehreren) elektrischen Endnutzereinrichtung(en) 104 gemäß einem exemplarischen Ausführungsbeispiel der Erfindung. Auf welche Weise weitere Verbraucher zugeschaltet werden können, ist in einem Schema 310 gezeigt, dem noch ein vereinfachtes Ersatzschaltbild 320 zugeordnet ist.

Bezugnehmend auf Schaltungsblock 330 ist noch zu erwähnen, dass dort nur eine von zum Beispiel drei Phasen dargestellt ist, sodass gegebenenfalls mehrere Schaltungsblöcke 330 parallel anzuordnen wären, welche in Stern- als auch Dreieckschaltung aufgeführt werden können.

Es werden für die folgende Betrachtung folgende Vereinfachungen gemacht: Transformator 200, welcher den Übergang von Mittelspannungsnetz 302 auf Niederspannungsnetz 304 bewerkstelligt, wird durch eine ideale Spannungsquelle Uₛ ersetzt. Die Impedanzen des Leitungsnetzes werden durch Zₛ repräsentiert. Die Veränderungen der Impedanz dieses Netzes ist mit T₁ als mittlere Veränderungszeit definiert. Die Veränderung der Impedanz dieses Netzes ist langsam und selten (d.h. T₁ ist groß).

Diese schon vereinfachte Darstellung des Niederspannungsnetzes wird nun noch in Relation zur Impedanzdarstellung einer klassischen Versorgung mit Quellenimpedanz gebracht: In **Figur 4** ist somit eine Versorgungsschaltung 400 mit idealer Quelle Uo, Innenwiderstand Zₛ und Endnutzereinrichtung 104 (aber noch ohne parallele Lastwiderstände) dargestellt. Der hier dargestellte Messwiderstand Zₘ kann exemplarisch durch die lokal vorhandenen Endverbraucherwiderstände 104 gebildet werden. Alternativ kann eine separate Messeinrichtung zur Impedanzmessung verwendet werden. Insbesondere eignet sich eine Messeinrichtung mit variablen Messwiderständen Zₘ.

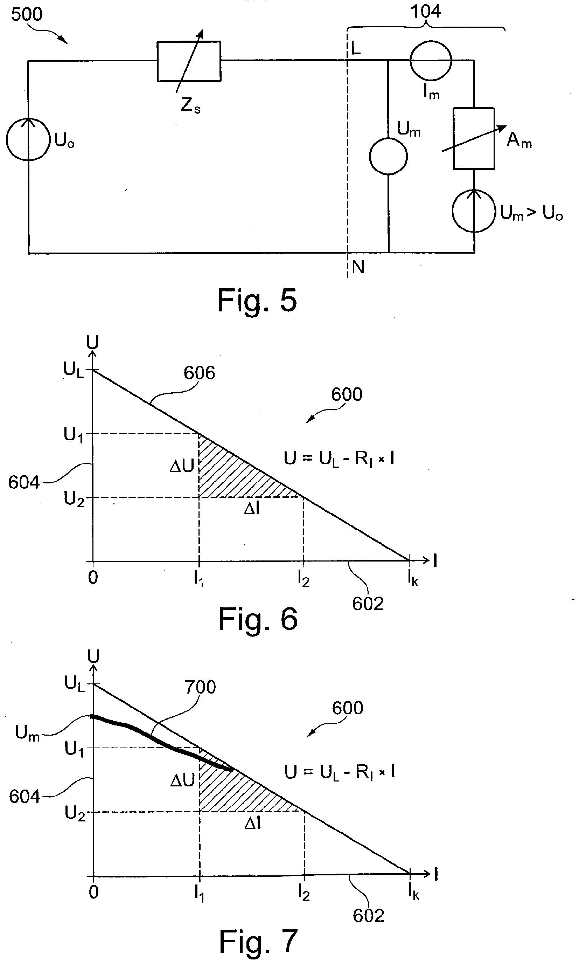

**Figur 5** zeigt eine zu Figur 4 alternative Schaltung 500. Bei einem entsprechenden Messverfahren wird nicht das Energieversorgungsnetz 102 mit dem Messwiderstand Zₘ belastet, sondern über eine Energieeinspeiseanlage (zum Beispiel Photovoltaikanlage, Batterie oder Speicherkondensator) Leistung ins Energieversorgungsnetz 102 zurückgespeist und aufgrund von bekannten (idealerweise variablen) Eigenimpedanzen (Aₘ) die Impedanz Zₛ ermittelt.

Ein wichtiger Schaltungsunterschied zwischen den Skizzen gemäß Figur 5/Figur 4 und Figur 3 sind die Impedanzen Z₁, Z₂, Z₂', usw. (zusammenfassbar als Z_{andere}). Diese anderen Verbrauchern parallel geschalteten Verbraucher an derselben Linie verzerren die Linearität der U-I Kennlinie. Eine U-I Kennlinie ohne Verzerrung ist eine Gerade mit konstanter Steigung unabhängig von Messpunkt (siehe Figur 6).

**Figur 6** zeigt ein Diagramm 600, in dem eine Spannungs-Strom-Kennlinie 606 dargestellt ist. Entlang einer Abszisse 602 ist der Strom I aufgetragen, wohingegen entlang einer Ordinate 604 die Spannung U aufgetragen ist. In Figur 6 entspricht U_{L} der Spannung der idealen Quelle. Iₖ entspricht einem Kurzschlussstrom bei einem Messwiderstand von 0 Ohm.

Nun wiederum bezugnehmend auf Figur 3 ist angrenzend an einen Hausanschluss des Endverbrauchers (dargestellt durch Endnutzereinrichtung 104) eine Messeinheit angeordnet, welche Uₘ aufzeichnet. Durch einen (zum Beispiel elektronisch) zuschaltbaren (siehe Schalter 350) Lastwiderstand Rₘₑₛₛ (oder eine Lastimpedanz Zₘₑₛₛ) (was auch die gesteuerte Last selbst sein kann, in diesem Fall wäre das R_{L}) lässt sich der Strom Iₘ (siehe I₁ und I₂ in Figur 6) und die dadurch veränderte Messspannung Uₘ (siehe U₁ und U₂ in Figur 6) aufzeichnen. Aus dem Bezug von U₁ zu U₂ bei I₂ lassen sich Zₛ und Uₛ errechnen. Durch unterschiedliche Impedanzen bzw. Werte von Rₘₑₛₛ können verschiedene Messpunkte auf der Impedanzkennlinie ermittelt werden. Idealerweise wird also die Messung mit unterschiedlichen Messwiderständen Rₘₑₛₛ ausgeführt. Dass hierfür verschiedene Messpunkte gemessen werden, lässt sich folgendermaßen erklären: Im Gegensatz zu einer normalen Impedanzkennlinie (ohne parallele Verbraucher Z_{andere}) sieht die des vereinfachten Netzes (mit den parallelen Verbrauchern Z_{andere}) nun aus, wie in **Figur 7** dargestellt. Die dort dargestellte Kurve 700 ist nun keine Gerade mehr:
Je größer der Messwiderstand (Uₘ) ist, desto flacher wird die Kurve 700 und erreicht bei Uₘ->∞ in einer fast horizontalen Linie den Wert der Netzspannung am Endverbraucheranschluss.

Je kleiner der Messwiderstand, desto größer wird die Steigung und erreicht bei 0 Ohm den Kurzschlussstrom und dadurch die Steigung der idealen U-I-Kennlinie ohne Z₁, Z₂, Z₂', usw.

Durch viele Messpunkte mit verschiedenen Werten des Messstroms bzw. Messwiderstands kann die gebogene Kurve 700 in ihren wichtigen Segmenten interpoliert und so die Spannung am Transformator 200 (U₀, wurde mit einer idealen Quelle als Uₛ in Figur 3 vereinfacht dargestellt), Zₛ und die Summe der parallelen Lastimpedanzen Z₁, Z₂ und Z₂' (als Z_{andere} vereinfachbar) abgeschätzt werden. Diese so gewonnenen Abschätzungen lassen eine konkretere Aussage über den Netzauslastzustand zu. Die in Figur 7 dargestellte Messspannung Uₘ kann gleich der Nennspannung des Netzes sein.

Figur 5 veranschaulicht, wie bereits erwähnt, eine Messvariante, bei welcher nicht mit einem Messwiderstand gemessen wird, sondern mittels einer Fremdquelle mit bekanntem Innenwiderstand Energie zurückgespeist wird.

Weitere Aspekte der beschriebenen Messtechnik gemäß exemplarischen Ausführungsbeispielen der Erfindung sind die Veränderung der Messwerte, da weder Zₛ noch Z₁, Z₂, Z₂' (und damit Z_{andere}) konstant sind. Dabei sollen noch die beiden folgenden Aspekte erwähnt werden:
Zum einen verändert sich der Wert von Zₛ viel weniger häufig als die Last der Verbraucher (Z_{andere}). So lässt sich dadurch, dass T₂ kleiner als T₁ (oder sogar T₂ sehr viel kleiner als T₁) ist, eine zusätzliche Aussage über die Netzqualitätscharakteristik erreichen (T₁ und T₂ ist jeweils eine Durchschnittszeit zwischen zwei Veränderungen der Widerstände).

Zum anderen kann es sein, da für verschiedene Messpunkte Messungen gemacht werden, dass sich aufgrund von T₁ und T₂ die Werte bereits wieder verändert haben. Durch Mittelwertbildung einer größeren Anzahl Messungen lässt sich aber dennoch ein sinnvoller Aussagewert ermitteln. Vorteilhaft kann dabei das Nyquist-Theorem (Nyquist-Shannon-Abtasttheorem) betreffend den Übergang einer Messung bei der Grenzmessfrequenz zu einer Mittelwertmessung berücksichtigt werden.

Im Rahmen der vorliegenden Anmeldung kann unter dem Begriff "übertragene Energie", je nach Kontext, insbesondere eine gesamte zwischen dem Energieversorgungsnetz und Endnutzereinrichtungen übertragene Energiemenge oder nur ein Teil der insgesamt über das Energieversorgungsnetz übertragenen Energiemenge, welcher Teil sich auf eine bestimmte Endnutzereinrichtung oder eine Teilgruppe der Endnutzereinrichtungen bezieht, verstanden werden. Insbesondere kann darunter auch nur eine für eine lokale Belastung der Verteilstruktur relevante Energiemenge verstanden werden. Ferner kann der Begriff "übertragene Energie" entweder eine erzeugte Energiemenge (zum Beispiel erzeugt durch das Energieversorgungsnetz oder eine Energieerzeugungseinheit einer Endbenutzereinrichtung) oder eine verbrauchte Energiemenge (zum Beispiel von einer Energieverbraucheinheit einer Endnutzereinrichtung verbraucht oder eine am Energieversorgungsnetz ankommende eingespeiste Energie) bezeichnen. Insbesondere kann die übertragene Energie das Resultat einer erzeugten Energie in Verwendung der Verteilstruktur und in Bezug auf die verbrauchte Energie sein.

Ergänzend ist darauf hinzuweisen, dass "aufweisend" keine anderen Elemente oder Schritte ausschließt und "eine" oder "ein" keine Vielzahl ausschließt. Ferner sei darauf hingewiesen, dass Merkmale oder Schritte, die mit Verweis auf eines der obigen Ausführungsbeispiele beschrieben worden sind, auch in Kombination mit anderen Merkmalen oder Schritten anderer oben beschriebener Ausführungsbeispiele verwendet werden können. Bezugszeichen in den Ansprüchen sind nicht als Einschränkung anzusehen.

## Patentansprüche

1. Vorrichtung (100) zum Steuern der Übertragung von elektrischer Energie zwischen einem Energieversorgungsnetz (102) und zumindest einem Teil von einer Mehrzahl von Endnutzereinrichtungen (104), wobei die Vorrichtung (100) aufweist:
mindestens eine Sensoreinrichtung (106, 108, 170), die eingerichtet ist, Sensordaten zu detektieren, die indikativ sind für:
eine Menge zwischen dem Energieversorgungsnetz (102) und dem zumindest einen Teil der Mehrzahl von Endnutzereinrichtungen (104) übertragener Energie; und
eine Netzqualitätscharakteristik des Energieversorgungsnetzes (102);
eine Steuereinrichtung (110), die eingerichtet ist, die Übertragung elektrischer Energie basierend auf den detektierten Sensordaten zu steuern;
**dadurch gekennzeichnet, dass** die Netzqualitätscharakteristik eine Impedanzinformation bezüglich zumindest einem Teil des Energieversorgungsnetzes (102) aufweist und dass die Impedanzinformation einen Zeitverlauf der Impedanz aufweist.

2. Vorrichtung (100) gemäß Anspruch 1, wobei
die Impedanzinformation den Zeitverlauf der Impedanz in Kombination mit einem Zeitverlauf einer Nennspannung des Energieversorgungsnetzes (102) aufweist.

3. Vorrichtung (100) gemäß Anspruch 1 oder 2, wobei die Vorrichtung (100) zumindest eines der folgenden Merkmale aufweist:
die Steuereinrichtung (110) ist eingerichtet zum Steuern der Übertragung von elektrischer Energie von dem Energieversorgungsnetz (102) zu Energieverbraucheinheiten der Endnutzereinrichtungen (104);
die Steuereinrichtung (110) ist eingerichtet zum Steuern der Übertragung von elektrischer Energie von Energieerzeugungseinheiten der Endnutzereinrichtungen (104) zu dem Energieversorgungsnetz (102).

4. Vorrichtung (100) gemäß einem der Ansprüche 1 bis 3, wobei die Vorrichtung (100) zumindest eines der folgenden Merkmale aufweist:
die Steuereinrichtung (110) ist ausgebildet als den Endnutzereinrichtungen (104) übergeordnete Steuereinrichtung (110), welche eine oder mehrere Endnutzereinrichtungen (104) zentral steuert;
die Steuereinrichtung (110) ist eingerichtet, die Steuerung basierend auf einem mittels der Sensoreinrichtung (106, 108, 170) detektierten Zeitverlauf der Netzqualitätscharakteristik zu steuern;
die Netzqualitätscharakteristik ist indikativ für die von dem Energieversorgungsnetz (102) gegenwärtig und/oder in absehbarer Zukunft leistbare Energieversorgungskapazität, insbesondere eine Energieknappheit oder ein Energieüberangebot.

5. Vorrichtung (100) gemäß einem der Ansprüche 1 bis 4, wobei die Netzqualitätscharakteristik zumindest eine aus der Gruppe aufweist, die besteht aus einem von dem Energieversorgungsnetz (102) bereitgestellten elektrischen Spannungswert, einem von dem Energieversorgungsnetz (102) sich durch Verbrauch ergebenden elektrischen Stromwert, einem Crest Faktor der von dem Energieversorgungsnetz (102) bereitgestellten Versorgung, mindestens einem insbesondere diskontinuierlichen Spannungsereignis in der von dem Energieversorgungsnetz (102) bereitgestellten elektrischen Spannung, einer von dem Energieversorgungsnetz (102) bereitgestellten Leistung, einer von dem Energieversorgungsnetz (102) bereitgestellten Energie, Flicker-Ereignissen in dem von dem Energieversorgungsnetz (102) bereitgestellten Signal, mindestens einer Harmonischen oder Zwischenharmonischen der oder des von dem Energieversorgungsnetz (102) bereitgestellten elektrischen Spannung oder elektrischen Stroms, einem Rundsteuersignal, einer Asymmetrie in der oder dem von dem Energieversorgungsnetz (102) bereitgestellten elektrischen Spannung oder elektrischen Strom, und einer Frequenz der oder des von dem Energieversorgungsnetz (102) bereitgestellten elektrischen Spannung oder elektrischen Stroms.

6. Vorrichtung (100) gemäß einem der Ansprüche 1 bis 5, wobei die Impedanzinformation zumindest eine Information aus der Gruppe aufweist, die besteht aus:
einer Frequenzabhängigkeit der Impedanz;
einer Impedanzinformation, die indikativ für einen Innenwiderstand des Energieversorgungsnetzes (102) ist.

7. Vorrichtung (100) gemäß einem der Ansprüche 1 bis 6, wobei die Vorrichtung (100) zumindest eines der folgenden Merkmale aufweist:
die Steuereinrichtung (110) ist eingerichtet, das Steuern basierend auf mindestens einer zeitlichen Ableitung, insbesondere der ersten Ableitung und/oder der zweiten Ableitung, der erfassten Netzqualitätscharakteristik durchzuführen;
die Steuereinrichtung (110) ist eingerichtet, die Menge der übertragenen Energie unter Beteiligung des zumindest einen Teils der Mehrzahl von Endnutzereinrichtungen (104) autonom und unabhängig von dem Energieversorgungsnetz (102) und/oder von den anderen der Mehrzahl von Endnutzereinrichtungen (104) zu steuern;
die Vorrichtung (100) weist auf eine Lerneinrichtung (112), die zum Auffinden von Verhaltensmustern von zumindest einem Teil der Endnutzereinrichtungen (104) und/oder des Energieversorgungsnetzes (102) in der Vergangenheit und zum Bereitstellen aufgefundener Verhaltensmuster an die Steuereinrichtung (110) als Basis für die zukünftige Steuerung eingerichtet ist;
die Vorrichtung (100) weist auf eine Voraussageeinrichtung (114), die basierend auf Vorhersagedaten zum Voraussagen einer von dem Energieversorgungsnetz (102) gegenwärtig und/oder in absehbarer Zukunft leistbaren Energieversorgungskapazität, insbesondere einer Energieknappheit oder eines Energieüberangebots, und zum Übermitteln eines Ergebnisses der Voraussage an die Steuereinrichtung (110) als Basis für die zukünftige Steuerung eingerichtet ist.

8. Vorrichtung (100) gemäß einem der Ansprüche 1 bis 7, wobei die Vorrichtung (100) zumindest eines der folgenden Merkmale aufweist
die Vorrichtung (100) weist auf eine Aufzeichnungseinrichtung (116), die zum Aufzeichnen von Daten eingerichtet ist, die indikativ für eine Zeit-Mengen-Charakteristik der von dem zumindest einen Teil der Endnutzereinrichtungen (104) aus dem Energieversorgungsnetz (102) entnommenen und/oder in das Energieversorgungsnetz (102) eingespeisten Energie und/oder für eine in der Vergangenheit herrschende Netzqualitätscharakteristik des Energieversorgungsnetzes (102) sind;
die Vorrichtung (100) weist auf eine Kommunikationsschnittstelle (118) zum Kommunizieren mit zumindest einer kommunizierfähig koppelbaren Entität (100, 102, 120, 122), insbesondere zumindest einer aus einer Gruppe, die besteht aus dem Energieversorgungsnetz (102), einer anderen Vorrichtung (100) und einer Datenbereitstellungsentität (120, 122) zum Bereitstellen von für die Steuerung verwendbaren Daten, wobei insbesondere
die Kommunikationsschnittstelle (118) eingerichtet ist, der Sensoreinrichtung (106, 108, 170) Daten zu übermitteln, die für die Menge zwischen dem Energieversorgungsnetz (102) und dem zumindest einen Teil der Mehrzahl von Endnutzereinrichtungen (104) übertragener Energie indikativ ist;
die Steuereinrichtung (110) ist eingerichtet, die Menge von mittels zumindest dem Teil der Endnutzereinrichtungen (104) aus dem Energieversorgungsnetz (102) entnommener und/oder in das Energieversorgungsnetz (102) eingespeister elektrischer Energie, insbesondere eines Zeitverlaufs der entnommenen und/oder eingespeisten Energie, basierend auf den detektierten Sensordaten, zu steuern;
die mindestens eine Sensoreinrichtung (106, 108, 170) ist eingerichtet, Sensordaten zu detektieren, die indikativ sind für eine Menge zwischen dem Energieversorgungsnetz (102) und zumindest einem anderen Teil der Mehrzahl von Endnutzereinrichtungen (104) übertragener Energie.

9. Anordnung (150), aufweisend:
ein Energieversorgungsnetz (102);
eine Mehrzahl von Endnutzereinrichtungen (104);
mindestens eine Vorrichtung (100) gemäß einem der Ansprüche 1 bis 7 zum Steuern der Übertragung von elektrischer Energie zwischen dem Energieversorgungsnetz (102) und zumindest einem Teil der Mehrzahl von Endnutzereinrichtungen (104).

10. Anordnung (150) gemäß Anspruch 9, wobei
zumindest ein Teil der Endnutzereinrichtungen (104) eine Energiezwischenspeichereinrichtung, insbesondere eine selektiv aufladbare und entladbare Batterie, aufweist.

11. Anordnung (150) gemäß Anspruch 9 oder 10, ferner aufweisend
zumindest eine weitere Vorrichtung (100) gemäß einem der Ansprüche 1 bis 7 zum Steuern der Übertragung von elektrischer Energie zwischen dem Energieversorgungsnetz (102) und zumindest einem jeweiligen anderen Teil der Mehrzahl von Endnutzereinrichtungen (104); wobei insbesondere die Vorrichtung (100) und die zumindest eine weitere Vorrichtung (100) relativ zueinander und relativ zu dem Energieversorgungsnetz (102) dezentral lokalisiert sind.

12. Anordnung (150) gemäß einem der Ansprüche 8 bis 10, wobei die Anordnung zumindest eines der folgenden Merkmale aufweist:
eine Anzahl der Endnutzereinrichtungen (104) (102) beträgt höchstens 1000, insbesondere höchstens 100, weiter insbesondere höchstens 10;
die Anordnung (150) weist auf einen in einem elektrischen Pfad zwischen dem Energieversorgungsnetz (102) und der Vorrichtung (100) angeordneten Mittelspannungstransformator (124), wobei die Steuereinrichtung (110) eingerichtet ist, einen Einfluss des Mittelspannungstransformators (124) bei der Steuerung zu berücksichtigen;
die Anordnung (150) weist auf einen in einem elektrischen Pfad zwischen dem Energieversorgungsnetz (102) und der Vorrichtung (100) angeordneten Tapchanger (124), der einen Transformator (200) mit mindestens einer Primärspule (202) und mindestens einer Sekundärspule (204) aufweist, wobei an der mindestens einen Primärspule (202) oder an der mindestens einen Sekundärspule (204) eine Einrichtung (206) zum insbesondere stufenweisen Verändern eines für ein Spannungstransformieren des Transformators (200) wirksamen Teilabschnitts der Primärspule (202) oder der Sekundärspule (204) vorgesehen ist.

13. Verfahren zum Steuern der Übertragung von elektrischer Energie zwischen einem Energieversorgungsnetz (102) und zumindest einem Teil von einer Mehrzahl von Endnutzereinrichtungen (104), wobei das Verfahren aufweist:
Detektieren von Sensordaten, die indikativ sind für:
eine Menge zwischen dem Energieversorgungsnetz (102) und dem zumindest einen Teil der Mehrzahl von Endnutzereinrichtungen (104) übertragener Energie; und
eine Netzqualitätscharakteristik des Energieversorgungsnetzes (102);
Steuern der Übertragung elektrischer Energie basierend auf den detektierten Sensordaten;
**dadurch gekennzeichnet, dass** die Netzqualitätscharakteristik eine Impedanzinformation bezüglich zumindest einem Teil des Energieversorgungsnetzes (102) aufweist und dass die Impedanzinformation einen Zeitverlauf der Impedanz aufweist.

14. Computerlesbares Speichermedium, in dem ein Programm zum Steuern der Übertragung von elektrischer Energie zwischen einem Energieversorgungsnetz (102) und zumindest einem Teil von einer Mehrzahl von Endnutzereinrichtungen (104) gespeichert ist, welches Programm, wenn es von einem Prozessor (110, 112, 114) ausgeführt wird, das Verfahren gemäß Anspruch 13 ausführt oder steuert.

15. Software-Programm zum Steuern der Übertragung von elektrischer Energie zwischen einem Energieversorgungsnetz (102) und zumindest einem Teil von einer Mehrzahl von Endnutzereinrichtungen (104), welches Software-Programm, wenn es von einem Prozessor (110, 112, 114) ausgeführt wird, das Verfahren gemäß Anspruch 13 ausführt oder steuert.

## Claims

1. Device (100) for controlling the transmission of electrical energy between an energy supply network (102) and at least a part of a plurality of end user facilities (104), wherein the device (100) has:
at least one sensor device (106, 108, 170), which is configured to detect sensor data, which are indicative for:
an amount of energy, which is transmitted between the energy supply network (102) and the at least a part of the plurality of end user facilities (104); and
a network quality characteristics of the energy supply network (102);
a control device (110), which is configured to control the transmission of electrical energy based on the detected sensor data;
**characterized in that**
the network quality characteristics has an impedance information relating to at least a part of the energy supply network (102) and **in that**
the impedance information has a variation in time of the impedance.

2. Device (100) according to claim 1, wherein
the impedance information has the variation in time of the impedance in combination with a variation in time of a nominal voltage of the energy supply network (102).

3. Device (100) according to claim 1 or 2, wherein the device (100) has at least one of the following features:
the control device (110) is configured to control the transmission of electrical energy from the energy supply network (102) to energy consumption units of the end user facilities (104);
the control device (110) is configured to control the transmission of electrical energy from energy generation units of the end user facilities (104) to the energy supply network (102).

4. Device (100) according to any one of the claims 1 to 3, wherein the device (100) has at least one of the following features:
the control device (110) is configured as a control device (110), which is superordinate to the end user facilities (104), and which controls centrally one or more end user facilities (104);
the control device (110) is configured to control the controlling based on a variation in time of the network quality characteristics, which variation in time is detected by the sensor device (106, 108, 170);
the network quality characteristics is indicative for the energy supply capacity, which is providable by the energy supply network (102) at present and/or in the foreseeable future, in particular an energy shortage or an energy surplus supply.

5. Device (100) according to any one of the claims 1 to 4, wherein
the network supply characteristics has at least one of the group, which consists of: an electrical voltage value provided by the energy supply network (102), an electrical current value resulting from consumption from the energy supply network (102), a crest factor of the supply provided by the energy supply network (102), at least one, in particular discontinuous, voltage event in the electrical voltage provided by the energy supply network (102), a power provided by the energy supply network (102), an energy provided by the energy supply network (102), flicker events in the signal provided by the energy supply network (102), at least one harmonic or interharmonic of the electrical voltage or of the electrical current provided by the energy supply network (102), a ripple control signal, an asymmetry in the electrical voltage or in the electrical current provided by the energy supply network (102), and a frequency of the electrical voltage or of the electrical current provided by the energy supply network (102).

6. Device (100) according to any one of the claims 1 to 5, wherein
the impedance information has at least one information from the group, which consists of:
a frequency dependency of the impedance;
an impedance information, which is indicative for an internal resistance of the energy supply network (102).

7. Device (100) according to any one of the claims 1 to 6, wherein the device (100) has at least one of the following features:
the control device (110) is configured to perform the controlling based on at least one time derivative, in particular the first derivative and/or the second derivative, of the measured network quality characteristics;
the control device (110) is configured to control the amount of the transmitted energy, under participation of at least a part of the plurality of end user facilities (104), autonomously and independently from the energy supply network (102) and/or from the other ones of the plurality of end user facilities (104);
the device (100) has a learning device (112), which is configured to determine behavior patterns of at least a part of the end user facilities (104) and/or of the energy supply network (102) in the past, and to provide determined behavior patterns to the control device (110) as a basis for the future controlling;
the device (100) has a predicting device (114), which is configured to predict an energy supply capacity, which is providable by the energy supply network (102) at present and/or in the foreseeable future, in particular an energy shortage or an energy surplus supply, and to transmit a result of the prediction to the control unit (110) as a basis for the future controlling.

8. Device (100) according to any one of the claims 1 to 7, wherein the device (100) has at least one of the following features:
the device (100) has a recording device (116), which is configured to record data, which are indicative for a time-amount-characteristics of the energy taken from the energy supply network (102) by the at least a part of the end user facilities (104) and/or fed in the energy supply network (102) and/or for a network quality characteristics of the energy supply network (102) prevailing in the past;
the device (100) has a communication interface (118) for communicating with at least one entity (100, 102, 120, 122), which is coupleable in a manner capable to communicate, in particular at least one from the group, which consists of the energy supply network (102), an other device (100), and data provision entity (120, 122) for providing data, which are useable for the controlling, wherein in particular the communication interface (118) is configured to transmit data to the sensor device (106, 108, 170), which data are indicative for the amount of energy transmitted between the energy supply network (102) and the at least a part of the end user facilities (104);
the control device (110) is configured to control the amount of electrical energy taken from the energy supply network (102) by the at least the part of the end user facilities (102) and/or fed in the energy supply network (102), in particular a variation in time of the taken and/or fed-in energy, based on the detected sensor data;
the at least one sensor device (106, 108, 170) is configured to detect sensor data, which are indicative for an amount of energy transmitted between the energy supply network (102) and at least another part of the plurality of end user facilities (104).

9. System (150) having:
an energy supply network (102);
a plurality of end user devices (104);
at least one device (100) according to any one of the claims 1 to 7 for controlling the transmission of electrical energy between the energy supply network (102) and at least a part of the plurality of end user facilities (104).

10. System (150) according to claim 9, wherein
at least a part of the end user facilities (104) has a temporary energy storage device, in particular a battery, which is selectively chargeable and dischargeable.

11. System (150) according to claim 9 or 10, further having
at least one further device (100) according to any one of the claims 1 to 7 for controlling the transmission of electrical energy between the energy supply network (102) and at least a respective other part of the plurality end user facilities (104), wherein in particular the device (100) and the at least one further device (100) are localized decentralized relative to each other and relative to the energy supply network (102).

12. System (150) according to any one of the claims 8 to 10, wherein the system (150) has at least one of the following features:
a number of end user facilities (104) (102) amounts to at most 1000, in particular at most 100, further in particular at most 10;
the system (150) has an intermediate voltage transformer (124) arranged in an electrical path between the energy supply network (102) and the device (100), wherein the control device (110) is configured to take an influence of the intermediate voltage transformer (124) into account in the controlling;
the system (150) has a tap changer (124), which is arranged in an electrical path between the energy supply network (102) and the device (100), and which has a transformer (200) having at least one primary coil (202) and at least one secondary coil (204), wherein a device (206) for, in particular stepwise, changing a partial section of the primary coil (202) or the secondary coil (204), which partial section is effective for a voltage transforming of the transformer (200), is provided at the least one primary coil (202) or at the least one secondary coil (204).

13. Method for controlling the transmission of electrical energy between an energy supply network (102) and at least a part of a plurality of end user facilities (104), wherein the method has:
detecting sensor data, which are indicative for:
an amount of energy, which is transmitted between the energy supply network (102) and the at least a part of the plurality of end user facilities (104); and
a network quality characteristics of the energy supply network (102);
controlling the transmission of electrical energy based on the detected sensor data;
**characterized in that**
the network quality characteristics has an impedance information relating to at least a part of the energy supply network (102) and **in that**
the impedance information has a variation in time of the impedance.

14. Computer-readable storage medium, in which a program for controlling the transmission of electrical energy between an energy supply network (102) and at least a part of a plurality of end user facilities (104) is stored, which program executes or controls the method according to claim 13, when it is executed by a processor (110, 112, 114).

15. Software program for controlling the transmission of electrical energy between an energy supply network (102) and at least a part of a plurality of end user facilities (104), which software program executes or controls the method according to claim 13, when it is executed by a processor (110, 112, 114).

## Revendications

1. Dispositif (100) servant à commander la transmission d'énergie électrique entre un réseau d'alimentation en énergie (102) et au moins une partie d'une pluralité de systèmes d'utilisateur final (104), le dispositif (100) présentant :
au moins un système de capteur (106, 108, 170), qui est mis au point pour détecter des données de capteur, qui sont indicatives :
d'une quantité d'énergie transmise entre le réseau d'alimentation en énergie (102) et au moins une partie de la pluralité de systèmes d'utilisateur final (104) ; et
d'une caractéristique de qualité de réseau du réseau d'alimentation en énergie (102) ;
un système de commande (110), qui est mis au point pour commander la transmission d'énergie électrique sur la base des données de capteur détectées ;
**caractérisé en ce que**
la caractéristique de qualité de réseau présente une information d'impédance par rapport à au moins une partie du réseau d'alimentation en énergie (102), et
que l'information d'impédance présente une évolution dans le temps de l'impédance.

2. Dispositif (100) selon la revendication 1, **caractérisé en ce que**
l'information d'impédance présente l'évolution dans le temps de l'impédance en combinaison avec une évolution dans le temps d'une tension nominale du réseau d'alimentation en énergie (102).

3. Dispositif (100) selon la revendication 1 ou 2, **caractérisé en ce que** le dispositif (100) présente au moins une des caractéristiques suivantes :
le système de commande (110) est mis au point pour commander la transmission d'énergie électrique depuis le réseau d'alimentation en énergie (102) vers des unités de consommation d'énergie des systèmes d'utilisateur final (104) ;
le système de commande (110) est mis au point pour commander la transmission d'énergie électrique depuis des unités de production d'énergie des systèmes d'utilisateur final (104) vers le réseau d'alimentation en énergie (102) .

4. Dispositif (100) selon l'une quelconque des revendications 1 à 3, **caractérisé en ce que** le dispositif (100) présente au moins une des caractéristiques suivantes :
le système de commande (110) est réalisé en tant que système de commande (110) supérieur aux systèmes d'utilisateur final (104), lequel commande de manière centrale un ou plusieurs systèmes d'utilisateur final (104) ;
le système de commande (110) est mis au point pour commander la commande sur la base d'une évolution dans le temps détectée au moyen du système de capteur (106, 108, 170) de la caractéristique de qualité de réseau ;
la caractéristique de qualité de réseau est indicative de la capacité d'alimentation en énergie pouvant être fournie actuellement et/ou dans un futur proche par le réseau d'alimentation en énergie (102), en particulier une pénurie d'énergie ou une suroffre d'énergie.

5. Dispositif (100) selon l'une quelconque des revendications 1 à 4, **caractérisé en ce que**
la caractéristique de qualité de réseau présente au moins une parmi le groupe qui est constitué d'une valeur de tension électrique mise à disposition par le réseau d'alimentation en énergie (102), d'une valeur de courant électrique résultant du réseau d'alimentation en énergie (102) du fait de la consommation, d'un facteur de crête de l'alimentation mise à disposition par le réseau d'alimentation en énergie (102), d'au moins un événement de tension, en particulier discontinu, dans la tension électrique mise à disposition par le réseau d'alimentation en énergie (102), d'une puissance mise à disposition par le réseau d'alimentation en énergie (102), d'énergie mise à disposition par le réseau d'alimentation en énergie (102), d'événements flicker dans le signal mis à disposition par le réseau d'alimentation en énergie (102), d'au moins une harmonique ou une harmonique intermédiaire de la tension électrique ou du courant électrique mise ou mis à disposition par le réseau d'alimentation en énergie (102), d'un signal de commande centralisée, d'une asymétrie dans la tension électrique ou le courant électrique mise ou mise à disposition par le réseau d'alimentation en énergie (102), et d'une fréquence de la tension électrique ou du courant électrique mise ou mis à disposition par le réseau d'alimentation en énergie (102).

6. Dispositif (100) selon l'une quelconque des revendications 1 à 5, **caractérisé en ce que**
l'information d'impédance présente au moins une information parmi le groupe qui est constitué :
d'une dépendance de fréquence de l'impédance ;
d'une information d'impédance, qui est indicative d'une résistance intérieure du réseau d'alimentation en énergie (102).

7. Dispositif (100) selon l'une quelconque des revendications 1 à 6, **caractérisé en ce que** le dispositif (100) présente au moins une des caractéristiques suivantes :
le système de commande (110) est mis au point pour effectuer la commande sur la base d'au moins une dérivée temporelle, en particulier de la première dérivée et/ou de la deuxième dérivée, de la caractéristique de qualité de réseau acquise ;
le système de commande (110) est mis au point pour commander la quantité de l'énergie transmise en impliquant au moins une partie de la pluralité de systèmes d'utilisateur final (104) de manière autonome et indépendamment du réseau d'alimentation en énergie (102) et/ou les autres de la pluralité de systèmes d'utilisateur final (104) ;
le dispositif (100) présente un système d'enseignement (112), qui est mis au point pour trouver des modèles de comportement d'au moins une partie des systèmes d'utilisateur final (104) et/ou du réseau d'alimentation en énergie (102) par le passé et pour mettre à la disposition du système de commande (110) des modèles de comportement trouvés en tant que base pour la commande future ;
le dispositif (100) présente un système de prédiction (114), qui est mis au point pour, sur la base de données de prédiction, prédire une capacité d'alimentation en énergie pouvant être fournie actuellement et/ou dans un futur proche par le réseau d'alimentation en énergie (102), en particulier une pénurie d'énergie ou une suroffre d'énergie, et pour transférer un résultat de la prédiction au système de commande (110) en tant que base pour la commande future.

8. Dispositif (100) selon l'une quelconque des revendications 1 à 7, **caractérisé en ce que** le dispositif (100) présente au moins une des caractéristiques suivantes
le dispositif (100) présente un système d'enregistrement (116), qui est mis au point pour enregistrer des données, qui sont indicatives d'une caractéristique temps-quantité de l'énergie prélevée du réseau d'alimentation en énergie (102) et/ou injectée dans le réseau d'alimentation en énergie (102) par au moins une partie des systèmes d'utilisateur final (104) et/ou d'une caractéristique de qualité de réseau, régnant par le passé, du réseau d'alimentation en énergie (102) ;
le dispositif (100) présente une interface de communication (118) servant à communiquer avec au moins une entité (100, 102, 120, 122) pouvant être couplée de manière à être en mesure de communiquer, en particulier au moins une entité parmi un groupe qui est constitué du réseau d'alimentation en énergie (102), d'un autre dispositif (100) et d'une entité de mise à disposition de données (120, 122) servant à mettre à disposition des données utilisables pour la commande, en particulier
l'interface de communication (118) étant mise au point pour transférer au système de capteur (106, 108, 170) des données, qui sont indicatives de la quantité d'énergie transmise entre le réseau d'alimentation en énergie (102) et au moins une partie de la pluralité de systèmes d'utilisateur final (104) ;
le système de commande (110) est mis au point pour commander la quantité d'énergie électrique prélevée du réseau d'alimentation en énergie (102) et/ou injectée dans le réseau d'alimentation en énergie (102) au moyen d'au moins la partie des systèmes d'utilisateur final (104), en particulier une évolution dans le temps de l'énergie prélevée et/ou injectée, sur la base des données de capteur détectées ;
au moins un système de capteur (106, 108, 170) est mis au point pour détecter des données de capteur, qui sont indicatives d'une quantité d'énergie transmise entre le réseau d'alimentation en énergie (102) et au moins une autre partie de la pluralité de systèmes d'utilisateur final (104).

9. Ensemble (150) présentant :
un réseau d'alimentation en énergie (102) ;
une pluralité de systèmes d'utilisateur final (104) ;
au moins un dispositif (100) selon l'une quelconque des revendications 1 à 7 servant à commander la transmission d'énergie électrique entre le réseau d'alimentation en énergie (102) et au moins une partie de la pluralité de systèmes d'utilisateur final (104).

10. Ensemble (150) selon la revendication 9, **caractérisé en ce que**
au moins une partie des systèmes d'utilisateur final (104) présente un système de stockage intermédiaire d'énergie, en particulier une batterie pouvant être chargée et déchargée de manière sélective.

11. Ensemble (150) selon la revendication 9 ou 10, présentant en outre
au moins un autre dispositif (100) selon l'une quelconque des revendications 1 à 7 servant à commander la transmission d'énergie électrique entre le réseau d'alimentation en énergie (102) et au moins une autre partie respective de la pluralité de systèmes d'utilisateur final (104), **caractérisé en ce qu'**en particulier
le dispositif (100) et au moins un autre dispositif (100) sont localisés l'un par rapport à l'autre et de manière décentrée par rapport au réseau d'alimentation en énergie (102).

12. Ensemble (150) selon l'une quelconque des revendications 8 à 10, **caractérisé en ce que** l'ensemble présente au moins une des caractéristiques suivantes :
un nombre des systèmes d'utilisateur final (104) (102) est au maximum de 1000, en particulier au maximum de 100, en particulier au maximum de 10 ;
l'ensemble (150) présente un transformateur de tension médiane (124) disposé dans un chemin électrique entre le réseau d'alimentation en énergie (102) et le dispositif (100), le système de commande (110) étant mis au point pour prendre en compte une incidence du transformateur de tension médiane (124) lors de la commande ;
l'ensemble (150) présente un changeur de prises (124) disposé dans le chemin électrique entre le réseau d'alimentation en énergie (102) et le dispositif (100), qui présente un transformateur (200) avec au moins une bobine primaire (202) et au moins une bobine secondaire (204), un système (206) servant à modifier, en particulier de manière progressive, une section partielle, active pour une transformation de tension du transformateur (200), de la bobine primaire (202) ou de la bobine secondaire (204) étant prévu au niveau d'au moins une bobine primaire (202) ou au niveau d'au moins une bobine secondaire (204).

13. Procédé servant à commander la transmission d'énergie électrique entre un réseau d'alimentation en énergie (102) et au moins une partie d'une pluralité de systèmes d'utilisateur final (104), le procédé présentant :
la détection de données de capteur, qui sont indicatives :
d'une quantité d'énergie transmise entre le réseau d'alimentation en énergie (102) et au moins une partie de la pluralité de systèmes d'utilisateur final (104) ; et
d'une caractéristique de qualité de réseau du réseau d'alimentation en énergie (102) ;
la commande de la transmission d'énergie électrique sur la base des données de capteur détectées ;
**caractérisé en ce que**
la caractéristique de qualité de réseau présente une information d'impédance par rapport à au moins une partie du réseau d'alimentation en énergie (102), et
que l'information d'impédance présente une évolution dans le temps de l'impédance.

14. Support de stockage lisible par ordinateur, dans lequel est mémorisé un programme servant à commander la transmission d'énergie électrique entre un réseau d'alimentation en énergie (102) et au moins une partie d'une pluralité de systèmes d'utilisateur final (104), lequel programme, quand il est exécuté par un processeur (110, 112, 114), exécute ou commande le procédé selon la revendication 13.

15. Programme logiciel servant à commander la transmission d'énergie électrique entre un réseau d'alimentation en énergie (102) et au moins une partie d'une pluralité de systèmes d'utilisateur final (104), lequel programme logiciel, quand il est exécuté par un processeur (110, 112, 114), exécute ou commande le procédé selon la revendication 13.
